# FASCICULE DE BREVET EUROPEEN

(11) **EP 1 987 281 B1**
(45) Date de publication et mention de la délivrance du brevet: **11.12.2013**
(21) Numéro de dépôt: 07731579.4
(22) Date de dépôt: 06.02.2007
(51) Int. Cl.: F16L 59/12, F16L 59/14, F16L 39/00, F16L 59/147, F16L 9/18, F16L 13/02

(54) **ELEMENT DE CONDUITES COAXIALES DONT LA CONDUITE INTERNE EST SOUS CONTRAINTE DE TRACTION ET PROCEDE DE FABRICATION**
ELEMENT MIT KOAXIALRÖHREN EINSCHLIESSLICH EINES INNENROHRES UNTER SPANNUNGSBELASTUNG UND HERSTELLUNGSVERFAHREN DAFÜR
ELEMENT COMPRISING COAXIAL PIPES, INCLUDING AN INNER PIPE UNDER TENSILE STRESS, AND PRODUCTION METHOD THEREOF

(30) Priorité: 24.02.2006 FR 0601603; 16.03.2006 FR 0602313
(43) Date de publication de la demande: 05.11.2008
(73) Titulaire: Saipem SA, 78180 Montigny-le-Bretonneux (FR)
(72) Inventeur: BAYLOT, Michel, F-13008 Marseille (FR); GOALABRE, Jean-Yves, F-13008 Marseille (FR); PIONETTI, François-Régis, F-50450 La Baleine (FR)
(74) Mandataire: Domange, Maxime
(86) Numéro de dépôt international: PCT/FR2007/050753
(87) Numéro de publication internationale: WO 2007/096548

(56) Documents cités:
- EP-A- 0 071 551
- DE-A1- 2 647 782
- FR-A- 2 873 427
- FR-A- 2 878 936
- FR-A1- 2 786 713
- MOLLISON M I: "FOAM INSULATION GETS FIRST REELED INSTALLATION OFF AUSTRALIA" 18 mai 1992 (1992-05-18), OIL AND GAS JOURNAL, PENNWELL, HOUSTON, TX, US, PAGE(S) 80-82 , XP000270952 ISSN: 0030-1388 figure 1

## Description

La présente invention concerne un procédé de fabrication d'un élément unitaire d'ensemble de conduites coaxiales, notamment des conduites sous-marines véhiculant des fluides chauds ou froids, de préférence des conduites sous-marines destinées aux grandes profondeurs.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes lesquelles peuvent dépasser 3000 m.

La présente invention concerne en particulier des éléments de conduites coaxiales destinées à la fabrication de conduites sous-marines installées sur les champs pétroliers par très grandes profondeurs, notamment les conduites de liaison fond-surface en suspension entre le fond de la mer et un navire de surface ancré sur ledit champ pétrolier.

Ces conduites coaxiales sont appelées "Pipe In Pipe" ou PiP, c'est à dire "conduite dans une conduite", dans laquelle une conduite interne véhicule le fluide et une conduite externe coaxiale à la précédente, appelée aussi "enveloppe externe", est en contact avec le milieu ambiant, c'est-à-dire l'eau. L'espace annulaire entre les deux conduites peut être rempli d'un matériau isolant ou encore être vidé de tout gaz.

Ces systèmes ont été développés pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 0.1 MPa, soit environ 1 bar pour 10m de profondeur, la pression à laquelle doit résister la conduite est alors d'environ 10 MPa, soit environ 100 bars pour 1000m de profondeur et d'environ 30 MPa, soit environ 300 bars pour 3000m.

Ces ensembles de conduites coaxiales sont fabriqués par assemblage bout à bout de longueurs unitaires dénommées ci-après "éléments de conduites coaxiales" ou "rames de conduites coaxiales", dont la longueur est en général de 10 à 100 mètres, plus particulièrement d'environ 12, 24 ou 48 mètres chacun(e).

Dans le cadre de l'installation de conduites sous-marines par grande profondeur, ces éléments de longueur unitaire sont fabriqués à terre. Puis, ils sont transportés en mer sur un navire de pose. Lors de la pose, les éléments unitaires d'ensemble de conduites coaxiales sont raccordés les uns aux autres à bord du navire et au fur et à mesure de leur pose en mer. Il est donc important que ce raccordement puisse être intégré dans le procédé de montage et d'assemblage de la conduite et de pose de celle-ci au fond de la mer.

Pour ce faire, on utilise des pièces de jonction ou pièces de raccordement forgées en acier, assemblées aux extrémités desdits éléments d'ensemble de conduites coaxiales à assembler. La pièce de jonction à l'extrémité aval d'un premier élément d'ensemble de conduites coaxiales non encore assemblé, étant raccordée à la pièce de jonction à l'extrémité libre amont d'un deuxième élément d'ensemble de conduites coaxiales déjà assemblé en aval.

Ces pièces de jonction forgées visent également à renforcer la résistance des conduites soumises à des flexions importantes au cours de la pose, notamment dans la zone de raccordement de deux dites longueurs unitaires successives, et plus particulièrement, dans le cas de liaisons fond-surface, à leur conférer une très grande résistance à la fatigue durant toute la durée de vie des installations.

Plus particulièrement la présente invention concerne desdites pièces forgées de jonction comprenant deux branches de révolution dont une branche externe et une branche interne formant une fourche délimitant ledit espace annulaire, fourche dont les extrémités cylindriques libres sont assemblées directement aux extrémités cylindriques respectivement des conduites externes et internes.

Des conduites coaxiales et pièces de jonction de ce type ont été décrits notamment dans FR 2 873 427.

Dans FR 2 786 713 on a décrit un autre mode de réalisation dans lequel on n'utilise pas de pièce de jonction pour assurer la fermeture de l'espace annulaire entre les conduites interne et externe à leurs extrémités, mais on fait dépasser les extrémités de la conduite interne par rapport à celles de la conduite externe et par déformation d'une partie terminale de la conduite externe autour de la partie terminale de la conduite interne en restriction de son diamètre jusqu'à les rapprocher l'une de l'autre pour fermer l'espace annulaire notamment par soudage des extrémités des conduites externe et interne entre elles .Ce type de fermeture de l'espace annulaire et jonction des extrémités des conduites coaxiales est appelé « croquage ».Il est avantageux car il permet à une machine de soudage d'avoir accès aux extrémités des conduites internes de deux éléments de conduites coaxiales successifs à assembler pour les souder bout à bout sans être gêné par les conduites externes associées. L'espace entre les extrémités de 2 conduites externes de 2 éléments de conduites coaxiales assemblés bout à bout est en général recouvert par un manchon tubulaire apportant isolation et renfort mécanique au niveau de la jonction, notamment un manchon coulissant par dessus la conduite externe.

Une opération fondamentale pour la fiabilité mécanique des conduites PiP, réside dans les soudures entre les pièces de jonction forgées et lesdites conduites coaxiales. En particulier, les soudeurs doivent pouvoir contrôler la soudure en cours de réalisation et après réalisation, notamment à l'aide de dispositifs de contrôle de soudure par sonde à ultrasons, qui peuvent être mis en oeuvre de manière manuelle ou robotisée par un opérateur, et, en tout état de cause, doivent être déplacés contre et à proximité de la soudure, d'une part, axialement en translation d'avant en arrière dans la zone de la soudure, et d'autre part, sur toute la circonférence de la périphérie de la conduite dans ladite zone de soudure.

C'est pourquoi, il est souhaitable de pouvoir réaliser les soudures entre les éléments de conduites coaxiales, depuis l'extérieur des conduites concernées, pour pouvoir les contrôler plus facilement. les zones de soudage sont en effet particulièrement sensibles au phénomène de fatigue, tant durant la pose que pendant la durée de vie de la conduite, c'est pourquoi il est important de pouvoir en contrôler soigneusement la fiabilité.

Dans EP 071551, on décrit une conduite coaxiale, comprenant une conduite interne et une conduite externe dont l'espace annulaire est fermé à chaque extrémité par croquage consistant dans la déformation de la partie terminale de la conduite externe, dont l'extrémité est directement raccordée à la surface de la conduite interne.

D'autre part, lorsque la conduite coaxiale est en service en cours d'utilisation au fond de la mer et que la température du fluide la traversant atteint des températures hautes (120-150°C), l'augmentation de température provoque une expansion de la conduite interne relativement à la conduite externe qui reste en contact de la température du fond de la mer (3-5°C), ce qui provoque une compression de ladite conduite interne, cette dernière étant bloquée à ses extrémités au niveau desdites fermeture de l'espace annulaire , le cas échéant au niveau des pièces de jonction forgées. Cette mise en compression est traditionnellement jugulée par la mise en place d'éléments centraliseurs entre lesdites conduites interne et externe qui sont d'un coût élevé, difficiles à installer et créent des ponts thermiques qui réduisent d'autant l'efficacité du système d'isolation.

Le but de la présente invention est donc de fournir des conduites coaxiales dont le comportement mécanique en service soit amélioré lorsqu'elles sont soumises à des conditions d'utilisation impliquant une expansion relative de la conduite interne par rapport à la conduite externe de manière à ce que les contraintes engendrées lors de la pose soient minimisées et que le comportement en fatigue, dans le cas des liaisons fond-surface, soit radicalement amélioré.

Pour ce faire la présente invention fournit un élément de conduites coaxiales comprenant une conduite interne et une conduite externe avec un espace annulaire, de préférence rempli d'un matériau d'isolation, et à chaque extrémité une fermeture dudit espace annulaire constituée par une pièce de jonction de révolution raccordée aux extrémités des dites conduite interne et externe et apte à permettre le raccordement deux dits éléments de conduites coaxiales bout à bout,
caractérisé en ce que ladite conduite interne est soumise à une contrainte de traction entre les extrémités fermées du dit espace annulaire exercée par lesdites fermetures, lorsque ladite conduite interne est hors service.

La présente invention fournit également un procédé de fabrication d'un élément de conduites coaxiales selon l'invention, caractérisé en ce que on réalise les étapes successives suivantes dans lesquelles :
1/ on réalise la fermeture de l'espace annulaire à une première extrémité dudit élément de conduites coaxiales par raccordement à une pièce de jonction, et
2) avant fermeture de l'espace annulaire à la seconde extrémité du dit élément de conduite en cours de fabrication par raccordement à une pièce de jonction directement ou par l'intermédiaire de deux demi coquilles en forme de demi manchons tubulaires formant un manchon tubulaire intercalé entre les extrémités des conduite externe et pièce de jonction, on expanse la seconde extrémité de la conduite interne dans la direction longitudinale axiale (XX') d'une longueur L par rapport à ladite seconde extrémité correspondante de ladite conduite externe , et
3) on réalise la fermeture de la seconde extrémité de l'espace annulaire de manière à ce que la dite conduite interne soit soumise à une dite contrainte de traction après fermeture de la seconde extrémité de l'espace annulaire.

Ainsi, la traction résiduelle de la conduite interne au cours du procédé de fabrication selon l'invention, permet de réduire d'autant la contrainte de compression de la conduite interne lorsque celle-ci est en service et, donc, d'augmenter l'espacement des éléments centraliseurs de la conduite coaxiales et donc réduire leur nombre.

On entend par "hors service", que ledit élément de conduites coaxiales n'est pas assemblé dans un ensemble d'éléments de conduites coaxiales ou est assemblé dans un tel ensemble d'éléments de conduites coaxiales, mais n'est pas manipulé et/ou n'est pas parcouru par un fluide à transporter. Une telle situation se produit en fin de processus de fabrication à terre, pendant le transport et l'installation lorsque l'élément de conduite ou la conduite est à température ambiante ,jusqu'à ce que la conduite repose sur le fond de la mer, à la température dudit fond de la mer, en attente du démarrage de la production, et enfin, en cas d'arrêt prolonge de la production, conduire interne et enveloppe externe étant alors stabilisées à la température de l'eau de mer (3-5°C).On entend par « élément de conduite ou conduite à température ambiante » , que les conduites interne et externe sont à la même température que la température environnante de l'air ou le cas échéant de l'eau de mer si la conduite est immergée.

Ladite contrainte de traction est donc due audit allongement résiduel de la conduite interne par rapport à sa longueur au repos, après résorption partielle de ladite expansion et fermeture de ladite seconde extrémité de l'espace annulaire de l'étape 3 ci-dessus. On entend ici par « repos » que ladite conduite interne n'est soumise à aucune traction ou compression, comme c'est le cas lorsqu'elle est hors service et en l'absence de pièce de jonction ou dite fermeture.

On comprend également que ladite contrainte de traction exercée par lesdites fermetures s'exerce en sens opposé à chaque extrémité de l'élément unitaire de conduite.

Selon une première variante de réalisation du procédé de fabrication d'un élément de conduites coaxiales selon l'invention, à l'étape 2/, on réalise l'expansion de ladite conduite interne par chauffage de celle-ci, de préférence à l'aide de dispositifs de chauffage que l'on introduit et, de préférence que l'on déplace à l'intérieur de ladite conduite interne et que l'on fait agir de manière uniforme ou non le long de ladite conduite, à l'intérieur de celle-ci.

Dans un second mode de réalisation, à l'étape 2/, on réalise ladite expansion par traction longitudinale XX' mécanique de la seconde extrémité de ladite conduite interne à l'aide d'un dispositif de traction comprenant un treuil ou un vérin disposé à l'extérieur de ladite conduite interne.

On comprend que la résorption de l'expansion de l'étape 3b/, se fait alors par simple refroidissement si l'expansion a été réalisée par chauffage et par relâchement de ladite traction si l'expansion a été réalisée par traction mécanique.

Il est également intéressant de pouvoir combiner les deux modes d'expansion, comme explicité plus loin.

Plus particulièrement, à l'étape 2), ladite expansion se fait par traction longitudinale de ladite conduite interne et compression longitudinale simultanée de ladite conduite externe au niveau de leurs dites secondes extrémités. Cette compression longitudinale est due à la mise en oeuvre de moyens de blocage de la conduite externe comme explicité plus loin

On comprend que après l'étape 3) la conduite interne conserve un allongement résiduel d'une amplitude variable-selon les cas suivants :
- l'allongement résiduel de la conduite interne est sensiblement égal à e dans le cas où l'expansion de la conduite interne a été obtenue par traction directe sur la conduite interne, induisant de manière concomitante une contrainte de compression dans l'enveloppe externe;
- l'allongement résiduel de la conduite interne représente un pourcentage Rₜₕ de e, dans le cas où l'expansion est obtenue par effet thermique, compte tenu que, lors du refroidissement de la conduite interne après soudure, la traction exercée par ladite conduite interne sur la soudure de fermeture de l'espace annulaire , notamment sur la pièce forgée provoque concomitamment une compression longitudinale de ladite conduite externe au niveau de sa seconde extrémité, ce qui a pour effet de raccourcir la longueur de la rame, réduisant d'autant la contrainte de traction dans la conduite interne. Ledit pourcentage Rₜₕ est fonction du rapport des surfaces des sections transversales d'acier de la conduite interne et de l'enveloppe externe;
- l'allongement résiduel de la conduite interne représente un pourcentage Rₘᵢₓₜₑ de e, dans le cas où l'expansion est obtenue de manière mixte par traction mécanique et par effet thermique, Rₘᵢₓₜₑ étant compris entre 100% et Rₜₕ.

Plus particulièrement, selon une première variante,on réalise fabrication d'un élément de conduites coaxiales comprenant une conduite interne et une conduite externe et comportant à chacune de ses extrémités une pièce de jonction forgée de révolution, chaque dite pièce de jonction forgée comportant au moins deux premières branches de révolution, dont une première branche interne et une première branche externe, l'extrémité cylindrique de ladite première branche externe étant en retrait d'une longueur L₁ par rapport à l'extrémité cylindrique de ladite première branche interne selon l'invention, et :
- à l'étape 1) on réalise les étapes successives suivantes dans lesquelles:
   1a/ on soude l'extrémité cylindrique de ladite première branche interne d'une première pièce de jonction, avec une première extrémité de ladite conduite interne non recouverte par la conduite externe, la soudure étant réalisée depuis l'extérieure de ladite conduite interne, et
   1b/ on déplace ladite conduite externe co-axialement autour de ladite conduite interne, de manière à ce qu'une première extrémité de ladite conduite externe arrive bout à bout avec l'extrémité correspondante de la première branche externe de ladite première pièce de jonction, la seconde extrémité de ladite conduite interne étant en retrait par rapport à la seconde extrémité correspondante de ladite conduite externe d'une longueur L₃=L₁+e, et
   1c) on soude l'extrémité de ladite première branche externe de ladite première pièce de jonction forgée avec l'extrémité de ladite conduite externe, depuis l'extérieur de ladite conduite externe, et
- à l'étape 2) on expanse de manière réversible, dans la direction longitudinale axiale XX', ladite seconde extrémité de ladite conduite interne (1 b), de manière à ce que celle-ci dépasse d'une longueur L₂ supérieure à L₁+e par rapport à ladite seconde extrémité correspondante de ladite conduite externe, et
- à l'étape 3), on réalise les étapes successives suivantes dans lesquelles:
   3a) on soude depuis l'extérieur de ladite conduite interne, l'extrémité de la première branche interne (3₂) d'une deuxième dite pièce forgée avec ladite seconde extrémité de ladite conduite interne (1b) en position expansée, et
   3b) on résorbe en partie seulement l'expansion de ladite conduite interne jusqu'à ce que ladite seconde extrémité de ladite première branche externe de ladite deuxième pièce forgée arrive bout à bout avec ladite seconde extrémité de ladite conduite externe et
   3c) on soude depuis l'extérieur de ladite conduite externe, l'extrémité de ladite première branche externe de ladite deuxième pièce forgée avec ladite seconde extrémité de ladite conduite externe, ladite conduite interne se trouvant soumise à une traction correspondant à un allongement résiduel inférieur ou égal à e.

On comprend que dans ce cas, à l'étape 2), on réalise une expansion de ladite conduite interne d'une longueur L₂+L₃ telle que la distance entre l'extrémité libre de ladite première branche externe de la deuxième pièce forgée et l'extrémité de ladite conduite interne soit suffisante pour permettre, depuis l'extérieur de la conduite interne, là réalisation de la soudure de l'extrémité cylindrique libre de la première branche interne de la deuxième pièce forgée avec l'extrémité de la conduite interne. En pratique, cette distance L=L₁+L₂ doit être au moins égale à 5 cm (ce qui correspond à la taille de la torche de soudure) et, de préférence, au moins 10 cm lorsque l'on utilise un matériel pour mouvoir en rotation la torche de soudure autour de ladite conduite à souder, comme il sera explicité ci-après.

On comprend donc, également, qu'au repos, lorsque les deux conduites externe et interne sont à même température sans traction et sans compression, l'extrémité de la conduite externe dépasse de l'extrémité de la conduite interne d'une longueur L₃ au moins égale au différentiel de longueur L₁ entre lesdites premières branches interne et externe desdites pièces forgées, ceci afin que, après résorption de l'expansion (étape 3b), l'extrémité de ladite première branche externe arrive en contact bout à bout avec l'extrémité de ladite conduite externe.

Selon une de variante de réalisation, on fabrique un élément de conduites coaxiales comprenant une conduite interne et une conduite externe et comportant à chacune de ses extrémités une pièce de jonction forgée de révolution, chaque dite pièce de jonction forgée comportant au moins deux premières branches de révolution, dont une première branche interne et une première branche externe l'extrémité cylindrique de ladite première branche externe étant en retrait d'une longueur L₁ par rapport à l'extrémité cylindrique de ladite première branche interne et comprenant deux demi coquilles en forme de demi manchons tubulaires formant un manchon tubulaire intercalé entre les extrémités des conduite externe et pièces de jonction, et le procédé est caractérisé en ce que:
- avant l'étape 2), ladite seconde extrémité de ladite conduite interne, dépasse d'une longueur L₂ par rapport à ladite seconde extrémité correspondante de ladite conduite externe, et on soude depuis l'extérieur de ladite conduite interne, l'extrémité de la première branche interne d'une deuxième dite pièce forgée avec ladite seconde extrémité de ladite conduite interne, et
- à l'étape 2) on expanse, dans la direction longitudinale axiale XX', ladite seconde extrémité de ladite conduite interne, d'une longueur supérieure ou égale à e , de manière à ce qu'elle dépasse d'au moins L₂+e par rapport à ladite seconde extrémité de ladite conduite externe, et
- à l'étape 3) on réalise les étapes successives suivantes dans lesquelles:
   3a) on intercale entre les extrémités des conduite externe et dite première branche externe de la pièce forgée deux demi coquilles en forme de demi manchons tubulaires formant un manchon tubulaire d'une longueur L₁+L₂+e, et
   3b) on résorbe en partie seulement l'expansion de ladite conduite interne jusqu'à ce que l'extrémité de ladite première branche externe de la deuxième pièce forgée et ladite seconde extrémité de ladite conduite externe arrivent bout à bout avec les extrémités des deux demi coquilles du dit manchon, et
   3c) on soude depuis l'extérieur de ladite conduite externe, l'extrémité de ladite première branche externe de ladite deuxième pièce forgée et la ladite seconde extrémité de ladite conduite externe avec les extrémités des deux demi coquilles du dit manchon, ladite conduite interne se trouvant soumise à une traction correspondant à un allongement résiduel inférieur ou égal à e.

Avantageusement, ladite conduite interne est soumise à une traction correspondant à une dite contrainte de traction inférieure à 90%, de préférence de 5 à 75% de la limite élastique de l'acier constituant ladite conduite interne, lorsque ledit élément de conduite coaxiale est hors service c'est-à-dire notamment à température ambiante.

Lorsque lesdits éléments de conduites coaxiales sont assemblés entre eux pour former une conduite Pip formé d'un ensemble de dits éléments de conduites, la dite conduite interne est sous contrainte de traction, lorsque la conduite PiP est hors service, c'est-à-dire notamment à température ambiante.

Plus particulièrement, cette contrainte de traction correspond à la traction à exercer sur une dite conduite interne de 25 à 50 m de longueur pour lui faire subir un allongement de e= 5 à 100 mm correspondant à une partie de l'expansion qu'aurait subi la dite conduite interne parcourue par un fluide chaud créant ainsi un différentiel de température avec la conduite externe en contact avec le milieu ambiant, constitué par l'eau de mer en grande profondeur à une température de 3-5°C, ce qui représente un différentiel de température de 100 à 150°C, voire plus, entre la conduite intérieure et la conduite externe. En effectuant cette expansion au cours du processus de fabrication, il en résulte une précontrainte de traction de la conduite intérieure lorsque la rame est au repos, hors service, qui a pour effet de réduire d'autant la contrainte maximale de compression de ladite conduite interné lorsqu'elle est en service au fond de la mer et que le différentiel de température entre ladite conduite interne et ladite conduite externe est maximale. Cette précontrainte entraîne une réduction des contraintes de compression de la conduite interne en service, lorsque la conduite est en service à haute température au fond de la mer.

Cette contrainte de traction de la conduite interne peut être détectée et mesurée par des procédés et moyens connus, soit de type non destructif, soit de type semi-destructif.

Des procédé et moyens pour détecter une contrainte de traction consistent par exemple,
- à installer sur la conduite externe des jauges de contraintes parallèlement à l'axe XX du PiP et de manière circulaire perpendiculairement à ce même axe,
- puis à percer à proximité desdites jauges un trou de faible diamètre, par exemple 4mm, sur 75% à 80% de l'épaisseur de la conduite, de manière à ne pas perforer cette dernière.

En l'absence de précontrainte, aucune modification de l'état des jauges ne sera mise en évidence. En cas de précontrainte de la conduite intérieure, il se produira dans la zone du trou un relâchement de contraintes de compression existant dans l'enveloppe externe, induisant des allongements localisés, parallèlement à l'axe du PiP, allongements mis en évidence au niveau desdites jauges de contraintes longitudinales et circulaires. En connaissant les valeurs d'élongation obtenues dans la zone du trou, un calcul en éléments finis avec maillage fin, connu de l'homme de l'art, permet de déterminer l'ordre de grandeur des contraintes de compression de ladite enveloppe externe, donc d'en déduire l'ordre de grandeur de la contrainte de traction au sein de la conduite intérieure.

Il existe d'autres moyens non destructifs basés soit sur un bombardement de neutrons rapides, dont la trajectoire se trouve modifiée selon que ladite conduite est soumise à une contrainte de traction ou de compression. Cette méthode est très délicate à mettre en oeuvre, mais est utilisée de manière courante pour mettre en évidence l'état de relaxation des contraintes dans certaines pièces mécaniques sensibles utilisées principalement en aéronautique ou dans l'industrie spatiale.

En pratique, on observe un raccourcissement de la conduite interne de 5 à 100 mm pour un élément de conduite interne de 25 à 50 m..

D'autre part, comme mentionné précédemment, on observe en général également une compression de la conduite externe, mais d'une valeur moindre.

Il résulte de cette traction de la conduite interne que, lorsque l'on désolidarise les extrémités des dites conduites interne et externe de l'élément de conduites coaxiales à l'une au moins de ses extrémités au niveau de la fermeture de l'espace annulaire, notamment au niveau d'une dite pièce de jonction forgées soudées à ces extrémités, on observe un raccourcissement de ladite conduite interne.

Plus particulièrement, ledit élément de conduites coaxiales est destiné à l'assemblage de conduites sous-marines en acier et présente une longueur de 10 à 100 m, de préférence de 20 à 50 m.

Avantageusement, le matériau isolant est un matériaux microporeux ou nanoporeux, de préférence un aérogel, se présentant, de préférence encore, sous forme de grains de 0,5 à 5 mm de diamètre.

Plus particulièrement, le dit élément de conduites coaxiales selon l'invention, comprend à chaque extrémité une fermeture dudit espace annulaire constituée par une pièce de jonction de révolution, la dite pièce de jonction comportant au moins deux premières branches de révolution dont
- une première branche de révolution interne soudée directement à une extrémité de ladite conduite interne et
- une première branche externe soudée directement à l'extrémité de ladite conduite externe ou par l'intermédiaire de deux demi coquilles en forme de demi manchons tubulaires formant un manchon tubulaire intercalé entre les extrémités des conduite externe et pièce de jonction,
- lesdites premières branches internes de révolution étant plus longues par rapport aux dites premières branches externes d'une longueur L₁ dans la direction longitudinale axiale XX' dudit élément de conduites coaxiales.

Une dite pièce de jonction est donc

Avantageusement encore, dans le procédé selon l'invention on réalise l'expansion avec un dispositif de traction comprend ou coopère avec :
- des moyens de blocage de ladite conduite interne, permettant ainsi une translation longitudinale de ladite conduite interne en expansion lorsque le dispositif de traction est actionné, et autorisant la rotation de ladite conduite interne autour de son axe longitudinal XX' le cas échéant, et
- des moyens de blocage de ladite conduite externe, empêchant tout mouvement de translation longitudinale de ladite conduite externe, et autorisant sa rotation autour de son axe longitudinal XX'.

Plus particulièrement, lesdits moyens de blocage de la conduite externe, comprennent :
- un premier dispositif de blocage par compression radiale disposé fixement autour de ladite conduite externe tel qu'un collier à coins bloquant, et
- un premier corps périphérique fixe par rapport au sol, coopérant avec ledit premier dispositif de blocage par l'intermédiaire d'un premier palier autorisant la rotation de ladite conduite externe selon son axe longitudinal XX'.

Plus particulièrement encore, ledit premier palier comprend des roulements à rouleaux croisés, dans et entre une cage intérieure solidaire dudit collier, et une cage extérieure solidaire dudit premier corps périphérique fixe.

Dans un mode préféré de réalisation, ledit dispositif de traction comprend ou coopère avec au moins un tirant, constitué d'un câble ou d'une tige rigide, apte à être déplacé en translation longitudinale XX' par treuil ou un vérin, relié à un deuxième dispositif de blocage de ladite conduite interne par compression radiale de la paroi interne de ladite conduite interne, disposé à l'intérieur de ladite conduite interne, tel qu'un mandrin autobloquant.

Plus particulièrement, ledit dispositif de traction comprend au moins deux vérins diamétralement opposés, de préférence au moins quatre vérins régulièrement répartis circulairement, dont les pistons solidaires de tiges viennent en butée avec ledit premier corps périphérique fixe support dudit premier palier, lesdits vérins étant reliés au dit tirant par l'intermédiaire d'un second palier, constitué de préférence d'un roulement à rouleaux croisés, comportant un second corps périphérique fixe par rapport au sol supportant lesdits vérins, apte à coopérer avec un support solidaire dudit tirant, de sorte qu'en appliquant aux vérins une pression P, le tirant exerce une traction sur la conduite interne, tout en autorisant la rotation dudit élément de conduites autour de son axe longitudinal XX', lesdits premier et second corps périphériques ainsi que les tiges des vérins restant fixes par rapport au sol, autorisant ainsi l'utilisation d'une tête de soudage fixe.

D'autres caractéristiques et avantages de la présente invention apparaîtront à la lumière de la description détaillée qui va suivre, en référence aux figures suivantes dans lesquelles:
les figures 1A et 1B représentent en coupe longitudinale en vue de côté une rame de type PiP remplie d'un matériau isolant sous pression réduite de gaz et équipée à ses extrémités, respectivement gauche (fig. 1A) et droite (fig. 1B), de pièces forgées de jonction selon l'art antérieur,
la figure 1C représente une variante de réalisation, dans laquelle on intercale des demi manchons tubulaires entre les extrémités des branches externes de la pièce forgée et l'extrémité de la conduite externe,
la figure 2A représente en coupe longitudinale en vue de côté, l'extrémité droite d'une rame de type PiP selon l'invention, illustrant l'expansion longitudinale transitoire selon l'axe XX' de la conduite interne sur une longueur L₃+L₂, ladite conduite interne étant initialement en retrait d'une longueur L₃ par rapport à la conduite externe, de manière à pouvoir effectuer la soudure de ladite conduite interne sur la pièce forgée d'extrémité, depuis l'extérieur,
la figure 2B est une coupe identique à la coupe de la figure 2A, après résorption de l'expansion de ladite conduite interne, la pièce forgée d'extrémité venant alors en contact avec la conduite externe et autorisant de ce fait la réalisation de la soudure externe depuis l'extérieur,
la figure 3A représente en coupe longitudinale en vue de côté une rame de type PiP selon l'invention, dans laquelle l'expansion de la conduite interne est réalisée par chauffage de ladite conduite interne au moyen de trois cartouches chauffantes électriques réparties le long de ladite conduite interne,
la figure 3B illustre un autre mode de chauffage à l'aide d'un brûleur à gaz ou à fuel, ou encore un générateur d'air chaud,
la figure 3C illustre un autre mode d'expansion de la conduite interne basé sur la traction de l'extrémité de ladite conduite interne au moyen d'un treuil et d'un câble relié à un dispositif de blocage installé à proximité de l'extrémité de ladite conduite interne,
la figure 4A illustre le mode de soudage de la pièce forgée d'extrémité sur la conduite interne du PiP de la figure 3A, l'ensemble du PiP étant mis en rotation pour effectuer ledit soudage à l'aide d'une tête de soudage fixe,
la figure 4B illustre le mode de soudage de la pièce forgée d'extrémité sur la conduite extérieure du PiP après rétractation de la conduite interne par simple refroidissement, l'ensemble du PiP étant mis en rotation pour effectuer ledit soudage à l'aide d'une tête de soudage fixe,
la figure 4C illustre le mode de soudage de la pièce forgée d'extrémité sur la conduite interne du PiP de la figure 3C, l'ensemble du PiP étant mis en rotation pour effectuer ledit soudage à l'aide d'une tête de soudage fixe,
la figure 4D illustre le mode de soudage de la pièce forgée d'extrémité sur la conduite interne du PiP, avec un dispositif de traction comprenant des vérins hydrauliques, l'ensemble du PiP étant mis en rotation pour effectuer ledit soudage à l'aide d'une tête de soudage fixe,
la figure 4E est une vue en coupe selon AA de la figure 4A,
la figure 4F est une vue en coupe selon BB de la figure 4D,
les figures 5A et 5B représentent en coupe longitudinale en vue de côté, l'extrémité droite d'une rame de type PiP selon l'invention, respectivement au repos avant assemblage, et en expansion pour effectuer la soudure de la conduite interne sur la pièce forgée d'extrémité, ladite conduite interne se trouvant soumise à une traction après soudage sur ladite pièce de jonction forgée d'extrémité.
La figure 6 représente une vue de l'extrémité d'une rame PiP selon l'invention après expansion de la conduite interne et soudage sur une pièce de jonction avant insertion de 2 demi coquilles de longueur L₁+L₂+e,
Les figures 7A et 7B représente les extrémités gauche (fig.7A) et droite (fig.7B) d'une rame différente de l'invention dont les extrémités sont croquées, l'extrémités droite (fig 7B) étant soumise à expansion de sa conduite interne avant soudage.

On entend ici par "pièce de jonction constituée d'un seul bloc", une pièce de jonction forgée constituée d'un seul tenant et non pas de plusieurs parties assemblées.

D'autre part, on entend ici par "soudées directement", le fait que les extrémités desdites conduites internes et externes et de la pièce forgée sont assemblées l'une à l'autre sans pièce ou élément intermédiaire intercalé.

Enfin, on entend par "cordon de soudure déposé du coté extérieur", que ledit cordon de soudure est réalisé sur la surface externe des conduites interne et respectivement externe le cas échéant.

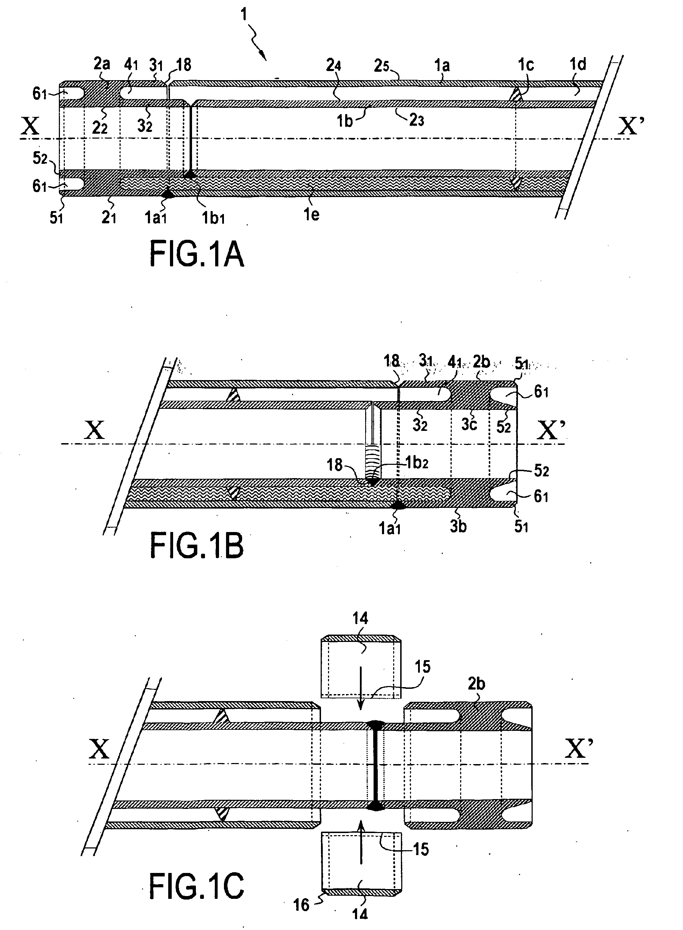

Dans les figures 1 à 5, on a représenté une conduite 1 de type PiP constituée d'une conduite externe 1a et d'une conduite interne 1b solidarisées par soudures à une première pièce de jonction forgée 2a située sur la gauche de la figure 1A et à une seconde pièce de jonction forgée 2b située sur la droite de la figure 1B, l'espace annulaire 1d entre les deux dites conduites interne et externe, étant rempli d'un matériau isolant 1e. Des éléments centraliseurs 1c sont répartis, de manière espacée de préférence régulière, autour de la circonférence et le long de la longueur de la conduite interne. Ces centraliseurs maintiennent la distance radiale entre les conduites interne et externe et donc l'épaisseur dudit espace annulaire à une valeur sensiblement constante.

Lesdites pièces de jonction 2a, 2b sont délimitées comme suit :
dans une direction radiale par rapport à un axe longitudinal XX' de révolution de ladite pièce, elle est délimitée par une paroi interne cylindrique 2₂ sensiblement de même diamètre que celui de la partie courante de ladite conduite interne 1b, et par une paroi externe 2₁ cylindrique de diamètre sensiblement égal au diamètre externe de la partie courante de ladite conduite externe 1a, et
dans la direction axiale longitudinale XX',
   - du côté de ladite pièce de jonction destinée à être assemblée par soudage à l'extrémité desdites conduites externe et interne d'un dit élément de conduites coaxiales, lesdites parois externe 2₁ et interne 2₂ de ladite pièce de jonction forment en section longitudinale des premières branches respectivement externe 3₁ et interne 3₂ sensiblement de même épaisseur que lesdites conduites externe 1a et interne 1b auxquelles elles sont destinées à être assemblées, lesdites premières branches externe 3₁ et interne (3₂) délimitant une première cavité annulaire 4₁ et
   - du côté opposé de ladite pièce de jonction destinée à être assemblée à une autre dite pièce de jonction, elle-même assemblée par soudage à l'extrémité d'un autre élément d'ensemble de conduites coaxiales, lesdites parois externe 2₁ et interne 2₂ forment en section longitudinale des deuxièmes branches respectivement externe 5₁ et interne 5₂, délimitant une deuxième cavité annulaire 6₁,
   - les fonds desdites première et deuxième cavités 4₁, 6₁ étant espacés dans ladite direction longitudinale XX', de manière à délimiter une zone pleine de ladite pièce de jonction dans laquelle lesdites parois externe 3₁ et interne 3₂ forment les faces externe et interne d'une même paroi cylindrique.

La première cavité annulaire 4₁ est ouverte sur l'espace annulaire 1d et peut recevoir le matériel d'isolation 1e de façon à continuer l'isolation de la conduite le plus loin possible.

Après assemblage et raccordement de deux longueurs unitaires de PiP équipées de pièces de jonction forgées, la deuxième cavité annulaire 6₁ d'une première pièce de jonction 2a à l'extrémité aval d'une première longueur de PiP 1 est ouverte sur une deuxième cavité annulaire d'une deuxième pièce de jonction 2a à l'extrémité amont d'une deuxième longueur de PiP formant ainsi une chambre formée par soudage au niveau des extrémités des deuxièmes branches externes 5₁. Mais cette chambre n'est pas étanche, car l'extrémité des deuxièmes branches internes 5₁ des deux pièces de jonction n'est pas soudée, les faces desdites branches étant simplement en contact l'une avec l'autre.

Plus particulièrement, dans les pièces de jonction forgées :
- l'extrémité libre de ladite deuxième branche externe 5₁ présente une forme, de préférence un chanfrein 18, la rendant apte à être soudée, depuis l'extérieur de la conduite, à l'extrémité libre d'une autre dite deuxième branche externe d'une autre pièce de jonction à laquelle elle est destinée à être assemblée, ladite autre pièce de jonction étant, elle-même, assemblée à l'extrémité d'un deuxième dit élément d'ensemble de deux conduites coaxiales, et
- l'extrémité libre de ladite deuxième branche interne 5₂ présente une forme la destinant à buter en contact sans lui être soudée avec l'extrémité libre d'une autre dite deuxième branche interne d'une autre dite pièce de jonction assemblée à l'extrémité d'un dit deuxième élément d'ensemble de conduites coaxiales, et
- les extrémités libres des dites deuxièmes branche externe 5₁ et branche interne 5₂ d'une même pièce de jonction arrivent sensiblement au même niveau dans ladite direction longitudinale XX', et
- les deux dites deuxièmes branches externes des deux dites pièces de jonction destinées à être assemblées par soudure étant de même épaisseur, supérieure à l'épaisseur de ladite conduite externe, et de préférence supérieure à l'épaisseur de ladite deuxième branche interne de ladite pièce de jonction.

Les extrémités libres desdites premières branches externes 3₁ et interne 3₂ présentent une forme, en chanfrein 18, ce qui permet d'effectuer de manière connue une première passe de soudage dite « de pleine pénétration », suivie d'un remplissage complet du chanfrein. Sur la figure 1A, les chanfreins 18 sont tournés vers l'extérieur et sont donc aptes à être soudés depuis l'extérieur desdites conduites externe 3₁ et interne 3₂. Sur la figure 1B, les chanfreins 18 sont tournés vers l'extérieur à l'extrémité de ladite première branche externe et vers l'intérieur à l'extrémité de ladite première branche interne, les rendant aptes à être soudés respectivement depuis l'extérieur dudit ensemble pour lesdites premières branches externes et depuis l'intérieur de ladite conduite interne pour lesdites premières branches internes.

La formation desdites première et deuxième cavités annulaires permet d'une part d'établir une continuité au niveau du diamètre interne de la conduite interne et d'autre part de fournir une relative continuité et identité d'inertie de la section transversale, de la zone courante du PiP et de la zone de raccordement, l'épaisseur de la branche externe de la pièce de jonction forgée étant sensiblement égale ou légèrement supérieure à l'épaisseur courante de la conduite externe.

L'éloignement des extrémités desdites premières branches externe et interne par rapport au fond de la première cavité et de l'extrémité de ladite deuxième branche externe par rapport au fond de ladite deuxième cavité, permet de réaliser les soudages dans les meilleures conditions, car la masse d'acier de part et d'autre de la zone de soudage est sensiblement égale et la zone de fusion ne se trouve alors pas perturbée par un « effet radiateur » provoqué par la zone pleine et massive située entre les fonds desdites première et deuxième cavités, ladite perturbation consistant en un refroidissement déséquilibré entre la gauche et la droite de ladite zone de soudure.

Enfin, la continuité du diamètre de la paroi externe au niveau de la dite pièce de jonction par rapport à celui des parties courantes des conduites externes permet de créer une augmentation importante de l'inertie de la section transversale au niveau de la zone de raccordement de deux pièces de jonction adjacentes, et donc de renforcer le raccordement là où précisément les contraintes sont maximales. En effet, l'inertie de la section transversale d'une conduite par rapport à son centre varie comme la puissance 4 du rayon. En conséquence, si la section transversale considérée correspond à celle de la conduite externe du PiP, l'épaisseur nécessaire est fortement réduite, voire même dans certains cas divisée par deux, ce qui simplifie considérablement les opérations d'assemblage par soudage effectuées à bord des navires d'installation, dans des conditions difficiles.

D'autre part, le fait que deux pièces de jonction adjacentes soient soudées, uniquement au niveau de l'extrémité desdites deuxièmes branches externes, permet que la totalité des phénomènes de transferts de charge et de contraintes soit localisée au niveau externe et n'implique pas lesdites parois internes, ce qui permet de mieux contrôler les risques de fissuration ou phénomènes de fatigue et d'éviter que le dispositif ne se ruine complètement au niveau de la paroi interne.

En outre, le fait que les deux extrémités desdites deuxièmes branches internes de deux pièces de jonction adjacentes, ne soient pas soudées entre elles, autorise des mouvements infimes desdites parois internes face à face dus à des éventuelles flexions ou variations de pression ou de température et autorise que lesdites parois internes puissent se déformer plastiquement et permettre un matage desdites deuxièmes branches internes sans risquer de transférer des charges de compression de contact, ce qui permet d'éviter de perturber la répartition des contraintes dans la zone d'assemblage et que l'essentiel des contraintes soit repris au niveau des parois externes desdites pièces.

La formation de ladite paroi interne cylindrique qui assure une continuité presque complète avec la conduite interne, permet d'éviter des phénomènes de turbulence du type vortex dans la circulation du fluide à l'intérieur du dispositif après assemblage, au niveau du raccordement de deux dites pièces de jonction de deux portions de PIP adjacentes.

On notera que ladite deuxième cavité ne doit pas être étanche après raccordement de deux pièces de jonction, vis-à-vis de l'intérieur de ladite paroi interne et de ladite conduite interne car lors du démarrage de la circulation d'un fluide à l'intérieur, celui-ci devra migrer vers cette deuxième cavité, l'étanchéité étant assurée par la soudure externe au niveau de l'extrémité desdites deuxièmes branches externes, le fluide se trouvant piégé durant toute le durée de vie de l'installation au niveau de cette deuxième cavité.

Toutes ces caractéristiques contribuent à améliorer radicalement le comportement en flexion, ainsi qu'en fatigue, d'un dispositif impliquant deux éléments d'ensemble coaxial équipés de dites pièces de jonction raccordées l'une à l'autre, à bord des navires d'installation, et dans le cas de liaisons fond-surface, durant toute leur durée de vie qui peut excéder 30 ans.

Par ailleurs, la fabrication et l'assemblage desdites pièces de jonction sont relativement aisés et fiables en ce qui concerne le raccordement de deux pièces de jonction adjacentes et le raccordement d'une pièce de jonction avec l'extrémité d'un ensemble d'au moins deux conduites coaxiales.

Dans les figures 1A et 1B, on a représenté en coupe longitudinale en vue de côté une rame 1 de type PiP remplie d'un matériau isolant 1e sous pression réduite de gaz et équipée à ses extrémités, respectivement gauche et droite, d'une première pièce de jonction forgée 2a et d'une seconde pièce de jonction forgée 2b, assemblées selon l'art antérieur. L'assemblage est effectué par soudage selon la séquence suivante. La conduite interne 1b est soudée en premier sur la branche interne 3₁ de la première pièce de jonction forgée d'extrémité avec un cordon de soudure 1b₁ réalisé depuis l'extérieur de la conduite interne, comme représenté sur la figure 1A. Puis, l'enveloppe externe 1a est insérée autour de la conduite interne 1b et maintenue de manière concentrique grâce à des centraliseurs 1c répartis le long de la rame de manière régulière ou non. Ladite enveloppe externe est alors soudée par un cordon de soudure 1a₁ réalisé depuis l'extérieur de ladite conduite externe sur la branche externe 3₁ de ladite première pièce de jonction forgée 2a. Ces deux soudures sont réalisées depuis l'extérieur de manière connue.

Pour la clarté des figures, les cordons de soudure sont en général représentés seulement sur la partie basse de la figure, les éléments à souder étant représentés face-à-face en partie haute, prêts à être soudés.

La seconde extrémité nécessite un mode particulier de soudage, car les deux conduites sont en position finale coaxiale avec l'extrémité de la conduite externe qui recouvre l'extrémité correspondante de la conduite interne d'une longueur L₃. Lors de la mise en place de ladite seconde pièce forgée 2b, il est alors nécessaire de réaliser la soudure de ladite seconde pièce forgée 2b sur la conduite interne 1b avec une soudure 1b₂ réalisée depuis l'intérieur de ladite conduite interne, ce qui est très délicat et nécessite des moyens compliqués de contrôle, car les soudeurs n'ont pas une vision directe du bain de soudure en raison du confinement à l'intérieur de la conduite. La soudure de la seconde pièce forgée 2b sur l'enveloppe externe 1a est réalisée de manière conventionnelle en 1a₁ depuis l'extérieur.

Sur la figure 1C, on a représenté une variante de réalisation selon la technique antérieure, permettant de réaliser toutes les soudures entre les pièces de jonction 2a, 2b et les conduites interne et externe depuis l'extérieur desdites conduites. Pour ce faire, pour la mise en place de la deuxième pièce forgée 2b, on fait dépasser vers l'extérieur l'extrémité de la conduite interne par rapport à celle de la conduite externe, ce qui permet de réaliser une soudure de la conduite interne sur ladite pièce de jonction forgée, depuis l'extérieur de la conduite interne. Puis, on intercale, entre l'extrémité de la branche externe 3₁ de la pièce de jonction et l'extrémité correspondante de la conduite externe, deux demi coquilles 14 en forme de demi manchons tubulaires. Mais, ce mode de réalisation n'est pas satisfaisant car il affecte la fiabilité mécanique de la jonction entre la deuxième pièce de jonction 2b et l'élément de conduites coaxiales, notamment à cause de la nécessaire mise en oeuvre d'une soudure longitudinale au niveau de la jonction longitudinale 15 des deux demi coquilles, et à cause du nécessaire croisement de soudure entre la soudure circulaire au niveau des chanfreins 16 et la soudure longitudinale au niveau des bords longitudinaux 15, à l'extrémité desdites soudures longitudinales.

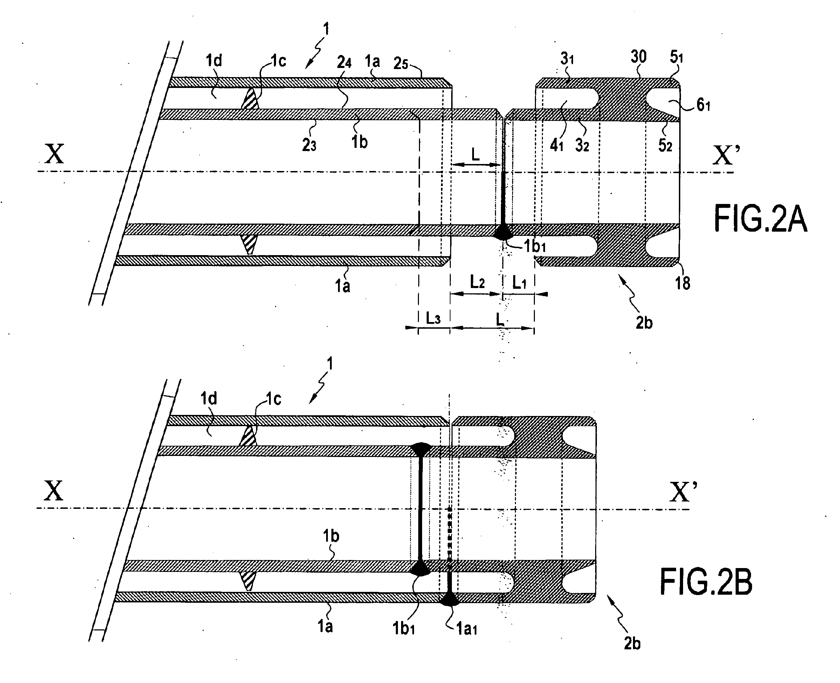

Dans les figures 2A et 2B, on a représenté en coupe longitudinale en vue de côté, le soudage de la seconde extrémité d'une rame 1 de type PiP à une seconde pièce forgée de jonction 2b assemblée selon l'invention par soudage depuis l'extérieur et selon la séquence suivante. Dans une première étape, la conduite interne et l'enveloppe externe sont soudées à la première pièce forgée, comme expliqué précédemment en regard de la figure 1A. La conduite interne 1b dont la seconde extrémité est initialement en retrait d'une longueur L₃ par rapport à la seconde extrémité correspondante de la conduite externe, est alors expansée de manière réversible, longitudinalement selon l'axe XX', du coté de sa deuxième extrémité d'une longueur L₃+L₂, comme il sera expliqué plus avant dans la description, de manière à ce que ladite deuxième extrémité de ladite conduite interne dépasse de l'extrémité de l'enveloppe externe d'une longueur L₂, telle que la distance entre ladite extrémité de l'enveloppe externe 1a et celle correspondante de la branche externe de la seconde pièce de jonction forgée 2b, au niveau de sa périphérie, atteigne une valeur L=L₂+L₁ suffisante pour permettre l'accès à la torche de soudage 9 et aux équipements de soudage conventionnels pour effectuer une soudure 1b₁ depuis l'extérieur, de l'extrémité de la conduite interne avec l'extrémité de la branche interne 3₂ de la pièce forgée 2b quand lesdites extrémités sont mises bout à bout. Après le soudage et les opérations de contrôle, l'expansion de la conduite interne est alors résorbée et la seconde pièce forgée revient en contact avec l'enveloppe externe pour être soudée de manière connue depuis l'extérieur en 1a₁.

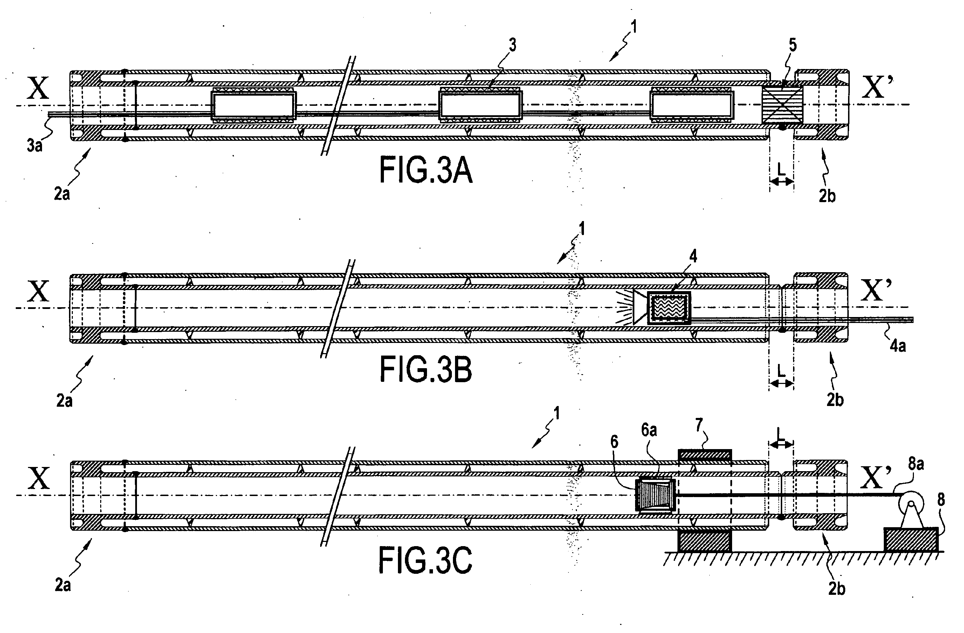

Sur la figure 3A, on a représenté un premier mode d'expansion de la conduite interne constitué d'un système de chauffage de ladite conduite interne. A cet effet, depuis la première extrémité, on insère une ou plusieurs cartouches chauffantes 3 constituées d'un cylindre métallique ou une pluralité de cylindres métalliques espacés comportant à leur surface des résistances électriques et introduits à l'intérieur de ladite conduite interne, réparties de manière uniforme ou non le long de ladite conduite interne. Ces cartouches 3 sont, alimentées par un câble 3a. Le chauffage provoque une expansion proportionnelle à la longueur de conduite mise en température et à la variation de température dans la zone considérée. L'expansion de la conduite interne 1b permet de dégager un espace libre L=L₀=L₂+L₁ entre les extrémités de la branche externe 3₁ et de la conduite externe 1a, permettant d'avoir accès à la zone de soudure pour effectuer l'assemblage de la seconde pièce forgée sur l'extrémité de ladite conduite interne, ladite soudure 1a₁ étant effectuée de manière connue depuis l'extérieur. Après le soudage et les opérations de contrôle, le chauffage est supprimé, puis la conduite interne, en se refroidissant, se rétracte et l'espace de valeur L tend vers 0. La seconde pièce forgée 2b vient alors en contact avec l'enveloppe externe 1a au niveau de sa périphérie et peut être ainsi soudée de manière connue depuis l'extérieur en 1a₁.

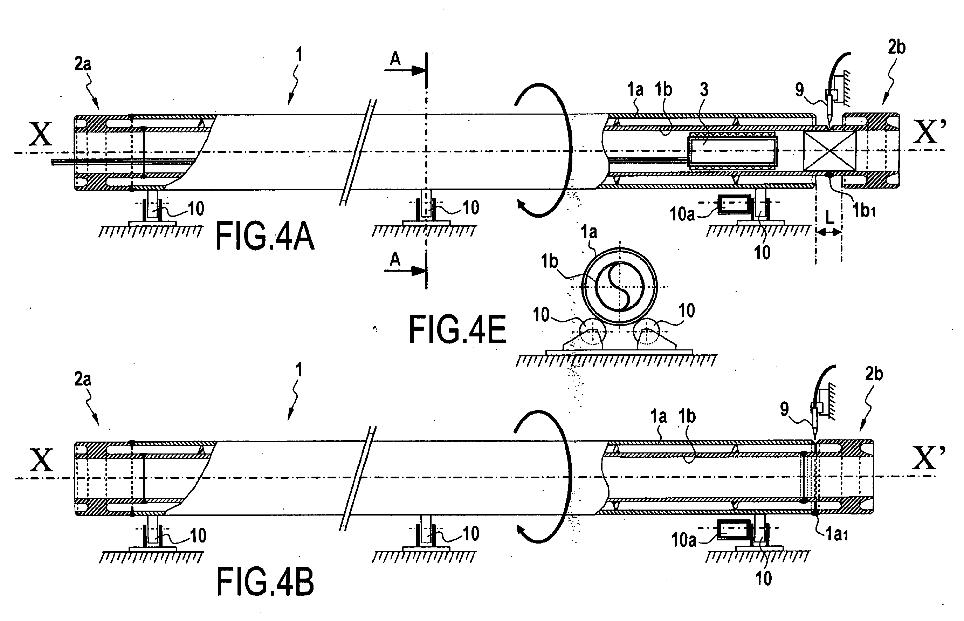

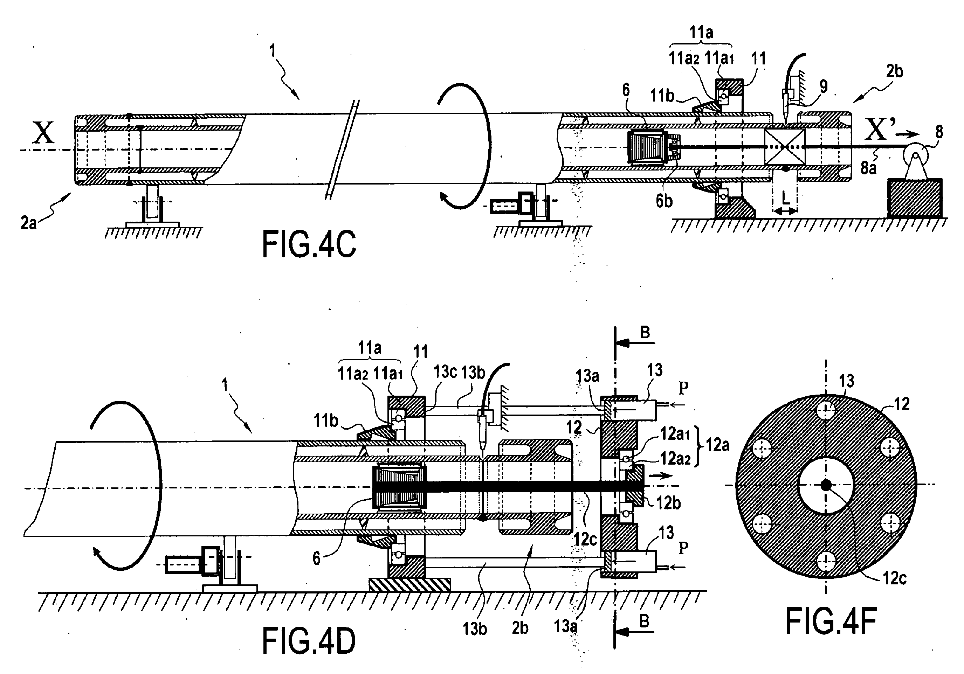

Pour la clarté des dessins, on a représenté un manchon faisant office de gabarit positionneur 5 de la seconde pièce forgée 2b sur la conduite interne 1a, seulement sur les figures 3A, 4A et 4C, mais ce dispositif connu de l'homme de l'art est nécessaire dans tous les cas pour maintenir en position ladite seconde pièce forgée pendant toute la durée du processus de soudage.

Sur la figure 3B, on a représenté une alternative d'expansion thermique de la conduite interne basée sur l'utilisation d'un générateur d'air chaud 4, ou d'un simple brûleur à gaz ou à mazout, alimenté depuis l'une des extrémités, par exemple depuis la seconde extrémité du PiP, par une conduite 4a.

Sur la figure 3C, on a représenté un mode d'expansion basé sur une traction mécanique de la conduite interne effectuée à l'aide d'un treuil 8 extérieur à la conduite, relié par un câble 8a à un mandrin 6 à coins autobloquants 6a situé à l'intérieur de la conduite externe et venant se bloquer contre la paroi interne 2₃ de ladite conduite interne, dans une zone proche de l'extrémité de ladite conduite interne, par exemple à 1 m de ladite extrémité. L'enveloppe externe 1a du PiP est fermement maintenue par un dispositif de blocage 7 fixé au sol, assurant une compression radiale de ladite conduite externe au niveau de la surface externe 2₅ de sa deuxième extrémité. Le treuil 8 est alors mis en tension et lorsque l'espace L=L₀ recherché est atteint, ledit treuil est bloqué et l'opération de soudage de la seconde pièce forgée 2b sur l'extrémité de la conduite interne est réalisée de manière précédemment décrite depuis l'extérieur.

Un dispositif de traction similaire basé sur l'utilisation de vérins hydrauliques 13 sera développé plus avant dans la description, dans une version préférée de l'invention.

Dans toutes ces méthodes décrites, le mode conventionnel de soudage utilisé, connu de l'homme de l'art sous le nom de soudage orbital, utilise un dispositif de soudage, de type collier de guidage, installé sur la conduite, sur lequel se déplace un chariot portant la ou les têtes de soudage, le soudage s'effectuant alors sur une conduite fixe par rapport au sol, lesdites têtes de soudage tournant autour de ladite conduite. Dans ce mode de soudage, le maintient du bain de soudure nécessite de faire varier de nombreux paramètres de soudage pour tenir compte de la zone en cours de soudage. En effet la partie supérieure de la conduite est extrêmement simple à souder, car le bain de soudure se tient naturellement, alors que en sous-face, le bain aurait tendance à couler et s'effondrer, les parties latérales et obliques présentant des difficultés complémentaires de niveaux variables. Ainsi, pour un tel type de soudage, les paramètres principaux de soudage, intensité, tension, fréquence, vitesse linéaire de la tête et du fil d'apport, etc., sont modifiés en temps réel en fonction de la position de ladite torche de soudage en rotation autour de la conduite.

Dans les figures 4A-4F, on illustre un mode préféré de l'invention, dans lequel la tête de soudage 9 reste fixe par rapport au sol, de préférence à la verticale sur le dessus de la conduite, la longueur complète de conduite reposant sur des roulettes ou vireurs 10 est alors mise en rotation contrôlée par l'intermédiaire d'un vireur motorisé 10a pour effectuer l'opération de soudage dans les meilleurs conditions opérationnelles de maintient du bain de soudage.

Sur la figure 4A, on a représenté le soudage de la seconde pièce forgée 2b sur la conduite interne 1b, l'expansion thermique étant assurée par les cartouches chauffantes 3 précédemment décrites en regard de la figure 3A.

Sur la figure 4B, en fin de soudage de la seconde pièce forgée sur la conduite interne 1b, le chauffage est arrêté et la conduite interne s'est rétractée, autorisant ainsi le soudage de la branche externe de la seconde pièce forgée 2b sur la seconde extrémité de l'enveloppe externe à l'aide d'une même tête de soudage 9, après repositionnement de cette dernière au droit du cordon de soudure circulaire 1a₁ à réaliser.

Sur la figure 4C, on a détaillé le dispositif selon l'invention utilisant un treuil de traction 8 tel que décrit en regard de la figure 3c. Pour que la rotation de la rame puisse s'effectuer librement, le dispositif comporte un premier corps périphérique 11 disposé par-dessus la surface externe 2₅ de la conduite externe, fixe par rapport au sol, coopérant par l'intermédiaire d'un premier palier 11a avec un collier à coins bloquants 11b venant comprimer la surface externe de la conduite externe, empêchant tout mouvement de translation de la rame 1 selon l'axe XX' vers la gauche, tout en autorisant sa rotation autour dudit axe XX'. Ledit premier palier 11a est constitué, par exemple, d'un roulement à rouleaux croisés à l'intérieur d'une première cage extérieure 11a₁ solidaire dudit corps périphérique 11 et d'une cage intérieure 11a₂ solidaire dudit collier à coins 11b. Le câble de traction 8a est relié au mandrin autobloquant 6 par l'intermédiaire d'un dispositif de type émerillon 6b qui autorise une rotation du mandrin 6 autour de l'axe longitudinal XX'. Le processus d'expansion de la conduite interne 1b reste similaire au processus précédemment décrit en regard de la figure 3C, et le processus de soudage reste alors identique à celui décrit en regard des figures 4A-4B, la rotation de la rame étant assurée par une motorisation, non représentée, intégrée au premier corps périphérique 11 ou par motorisation 10a d'un vireur 10.

Sur la figure 4D on a détaillée un dispositif utilisant des vérins hydrauliques 13 pour effectuer l'expansion de la conduite interne 1b, et permettant aussi de faire tourner la rame, donc d'utiliser une tête de soudage 9 en position fixe à la verticale, au dessus de la conduite à souder.

Le premier corps périphérique 11, le premier palier 11a et le collier à coins autobloquants 11b solidaires de la rame, ainsi que la motorisation 11a permettant de contrôler la rotation de la rame, sont identiques à celui décrit en regard de la figure 4C. Un tirant 12c, constitué d'un câble ou d'une barre rigide, voire d'un vérin, relie le mandrin autobloquant 6 à un second palier 12a, constitué par exemple d'un roulement à rouleaux croisés, par l'intermédiaire d'un support 12b solidaire du tirant 12c. Le second palier 12a est constitué d'un roulement à rouleaux croisés intégré dans et entre une cage intérieure 12a₂ solidaire dudit support 12b et une cage extérieure 12a₁ solidaire d'un deuxième corps périphérique 12 appliqué par-dessus la surface externe de la conduite interne et supportant au moins deux vérins hydrauliques 13 disposés diamétralement opposés par rapport à l'axe XX', en l'espèce 6 vérins hydrauliques répartis régulièrement, circulairement, comme représentés sur la figure 4f. Les pistons 13a desdits vérins 13 sont solidaires de tiges 13b venant en butée en 13c avec le premier corps périphérique 11. Ainsi, en appliquant aux vérins 13 une pression P, le second corps périphérique 12 s'éloigne du premier corps périphérique 11 dans la direction XX', le tirant 12c exerce alors une traction sur la conduite interne par l'intermédiaire du mandrin autobloquant 6. En augmentant progressivement la pression P, la conduite interne 1b s'expanse jusqu'à ce que l'espace entre les extrémités de l'enveloppe externe 1a et la branche externe 3₁ de la pièce forgé, atteigne la valeur L=L₀ nécessaire pour effectuer la soudure de la pièce forgée 2b sur la conduite interne 1b, comme expliqué précédemment. Lesdits premier et second paliers 11a-12a, autorisent la rotation de la rame complète alors que lesdits premier et second corps périphériques 11, 12, ainsi que les tiges 13b des vérins 13 restent fixes par rapport au sol, donc autorisent l'utilisation d'une tête de soudage fixe 9, avantageusement située à la verticale, au dessus de la conduite à souder. Lorsque la soudure 1b₁ de la conduite interne 1b sur la pièce forgée 2b est terminée, la pression dans les vérins est relâchée, la conduite interne se rétracte alors et la pièce forgée vient en contact avec l'enveloppe externe au niveau de sa périphérie, à laquelle elle peut alors être soudée de la même manière.

On a décrit sur les figures 3C et 4C l'utilisation d'un treuil de tensionnement 8, mais on reste dans l'esprit de l'invention en utilisant un vérin solidaire du sol et situé à l'axe XX' de la rame et relié au mandrin autobloquant 6 par l'intermédiaire d'un câble ou d'une barre métallique identique à la barre 12c de la figure 4D.

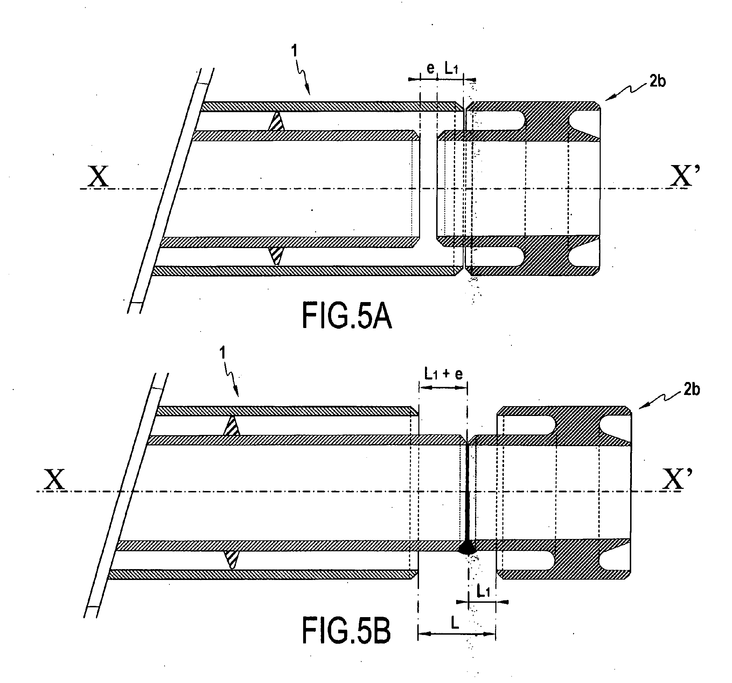

Dans le cas de PiP devant véhiculer des fluides à très haute température, l'enveloppe externe se trouve en général à la température du fond de la mer, c'est-à-dire 3-5°C, alors que la conduite interne se trouve à la température du fluide, laquelle peut atteindre 120-150°C, voire plus. Ainsi, lors de la fabrication de la rame de PiP, les deux conduites, au repos, sont à une température sensiblement identique (20-30°C par exemple). De même, une fois posées au fond, elles se retrouvent toutes deux à la température du fond de la mer (3-5°C), mais dès que le fluide circule, la température dudit fluide crée une contrainte de compression dans ladite conduite interne 1b, car cette dernière est bloquée à ses extrémités au niveau des pièces forgées. Cette mise en compression selon l'axe XX' risque de créer des instabilités de type flambage latéral dans le plan perpendiculaire à XX', risque que l'on supprime en installant à intervalles réguliers ou non, des centraliseurs 1c qui empêchent l'apparition de tels phénomènes. Mais, ces centraliseurs sont d'un coût élevé, sont délicats à installer et, de plus, créent des ponts thermiques qui réduisent d'autant l'efficacité du système d'isolation et il est avantageux de réduire leur nombre. A cet effet, la conduite interne 1b et l'enveloppe externe 1a étant au repos, à la même température, on ajuste la longueur de la conduite interne de manière à ce qu'elle soit plus courte d'une valeur L₁+e par rapport à la conduite externe, tel que représenté sur la figure 5a. L'expansion de la conduite interne est alors réalisée par l'un des procédés précédemment décrit, les mêmes paramètres thermiques ou d'effort donnant alors une expansion ménageant un espace L=L₀-e entre l'extrémité de la branche externe 3₂ de la pièce et l'extrémité de la conduite externe. Le soudage de la pièce forgée 2b sur la conduite interne 1b est alors effectué comme indiqué précédemment, puis la conduite interne est rétractée. Lorsque la pièce forgée vient en contact avec l'enveloppe externe 1a, la conduite interne présente alors une traction résiduelle proportionnelle à la valeur de e. En pratique, pour une longueur de rame de 50m, L₁ représente 10 à 100 mm et la valeur de e dépendra du point de fonctionnement en température de la conduite. Par exemple, si la conduite est portée à un différentiel de température par rapport à l'eau de mer δT=120°C en cours d'utilisation, on prévoira classiquement des valeurs de e de 35 à 45 mm, ce qui correspond à une contrainte, due à la seule température, nulle pour un différentiel de température δT=60°C, donc à un décalage vers le bas d'environ 50% du niveau de contrainte de compression dans la conduite interne. De la même manière pour δT=180°C, e=55 à 60 mm pour obtenir le même décalage de 50% vers le bas, de la contrainte de compression dans la conduite intérieure.

Ainsi, en cours d'utilisation à haute température, la contrainte de compression de la conduite interne se trouve réduite d'autant, ce qui permet d'augmenter l'espacement des centraliseurs, donc de réduire leur nombre.

Pour effectuer la soudure finale de la seconde pièce forgée 2b sur l'enveloppe externe, on prendra soin de maintenir dans la conduite interne un niveau d'expansion (température ou tension) suffisant pour que la face des deux pièces à souder ne soient pas appuyées l'une contre l'autre de manière significative, de manière à ce que la soudure puisse être effectuée sans contraintes de compression dans la zone de soudage. En fin de processus de soudage, l'expansion (chaleur ou tension) peut alors être complètement relâchée et la conduite intérieure atteint alors le niveau de prétension recherché.

Pour effectuer les opérations de soudage de la seconde pièce forgée sur la conduite interne, en laissant fixe la rame, comme décrit en regard des figures 3A-3B-3C, la distance L doit être de l'ordre de 10 cm pour autoriser le passage des têtes de soudage et des chariots de guidage circulaires, et avoir une bonne visibilité pour le contrôle du processus. Cette valeur d'expansion n'est possible à obtenir qu'avec des rames de longueur suffisante, par exemple 24-36-48m, voire plus, et ne peut être envisagée de manière réaliste sur des longueurs plus courtes car le différentiel de température ou la contrainte de traction serait alors incompatible avec les aciers utilisés.

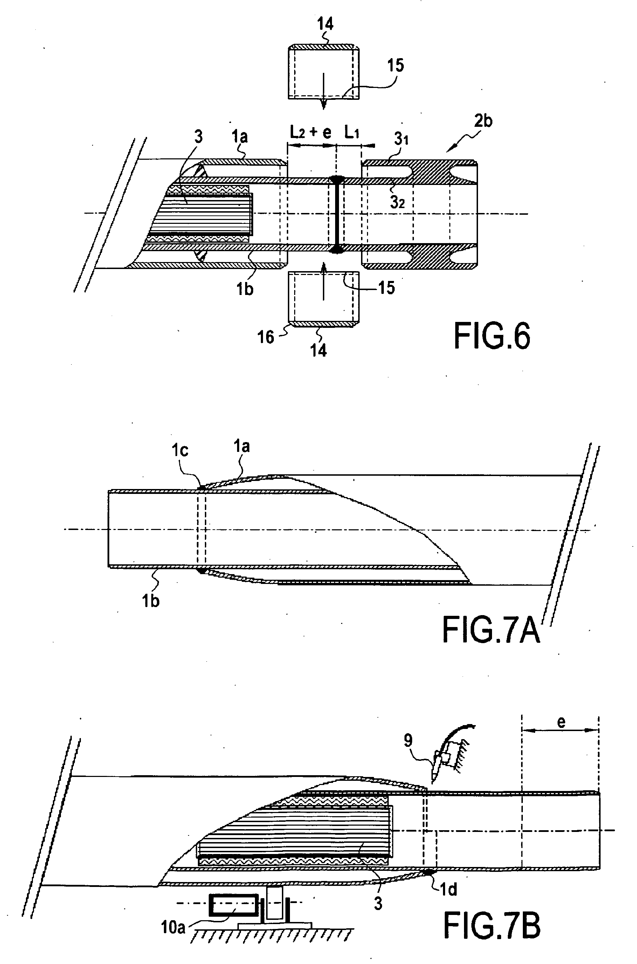

Dans le cas de l'assemblage de la seconde pièce forgée de jonction 2b sur l'extrémité de la conduite externe par l'intermédiaire de demi-coquilles 14, la procédure de précontrainte est détaillée sur la figure 6. Sur la figure 6 on a représenté les conduites internes et externes, la pièce forgée de jonction, ainsi que les deux demi-coquilles 14 de longueur L1+L2+e, ces dernières étant positionnées pour venir ultérieurement s'insérer entre la dite première branche externe de la pièce forgée de jonction et la conduite externe de la rame. Dans la figure 6, on a déplacé la pièce forgée de jonction vers la gauche, de telle manière qu'elle vienne en contact avec la conduite intérieure pour effectuer le soudage depuis l'extérieur, de manière connue, les deux conduites étant alors toujours hors service, au repos.

Dans la figure 6, on réalise l'expansion de la conduite intérieure au moyen de cartouches chauffantes 3 pour que ladite expansion de la conduite intérieure atteigne la valeur e, ce qui permet alors d'insérer les deux demi-coquilles 14, puis de les souder de manière connue en 15 et 16. Après refroidissement de la conduite intérieure, ladite conduite intérieure se trouve en état de précontrainte de traction, la conduite externe se trouvant alors dans un état de précontrainte de compression.

Dans les figures 7A-7B non relatives à l'invention, on a représenté le mode d'assemblage dans le cas d'une rame dont la conduite externe a ses extrémités croquées de manière à être soudées directement sur la conduite intérieure. La figure 7A représente la première extrémité de la rame, soudée en 1c depuis l'extérieur, de manière connue. Comme représenté sur la figure 7B, on expanse la conduite intérieure au moyen de cartouches chauffantes 3, ce qui a pour effet d'expanser l'extrémité de ladite conduite intérieure d'une longueur e par rapport à sa position initiale. On maintient le chauffage de manière à ce que cette valeur e reste stable, puis l'extrémité croquée de la conduite externe est alors soudée 1 d sur la conduite intérieure, à l'aide de la torche fixe 9, la rame étant mise en rotation au moyen de vireurs motorisés 10a. En fin de soudage, le chauffage est arrêté et, après refroidissement de la conduite intérieure, ladite conduite intérieure se trouve en état de précontrainte de traction, la conduite externe se trouvant alors dans un état de précontrainte de compression.

A titre d'exemple, une rame de type PiP de 50m de long, soit du type à pièces forgées d'extrémités sans demi-coquilles (figures 2-5), soit du type avec demi-coquilles (figure 6) ou encore du type à extrémités croquées (figures 7A-7B), constituée d'une conduite interne de 273,1 mm de diamètre et de 15,88 mm d'épaisseur, et d'une enveloppe externe de 355,6 mm de diamètre et de 19,1 mm d'épaisseur, nécessite une force de traction de 329,5 tonnes pour obtenir un déplacement de l'extrémité de la conduite interne de sorte que L=100mm, 61,1% du déplacement étant obtenu par l'allongement de la conduite interne (en traction), et 38,9% étant obtenu par contraction de l'enveloppe externe (en compression longitudinale).

On reste limité par le fait que la limite élastique de l'acier ne doit pas être dépassé, et pour un acier de qualité X60 selon la norme américaine API-5L, la limite élastique est de 413 MPa, les contraintes respectives de traction dans la conduite interne, et de compression dans l'enveloppe externe sont respectivement de 257MPa et 163MPa soit respectivement 62% et 40% des limites élastiques. Ces valeurs illustrent que si l'on divise par 2 la longueur de la rame (rame de 25 m) ces valeurs doublent pour obtenir l'élongation recherchée (L=100mm), et la contrainte dans la conduite interne devient alors inacceptable, alors qu'elle reste encore acceptable pour l'enveloppe externe.

En utilisant l'expansion thermique de la conduite interne, ou ce qui reviendrait au même, mais serait beaucoup plus compliqué à réaliser, le refroidissement cryogénique de l'enveloppe externe, on obtient une expansion à relativement basse température.

A titre d'exemple, la même conduite interne de 273,1 mm de diamètre et de 15,88 mm d'épaisseur soumise à une variation de température de 192,3° sur une longueur de 40 m présente une expansion thermique L de 100 mm.

Pour un fonctionnement de la conduite interne avec une température différentielle de δT=120°C par rapport à l'eau de mer, on fabriquera avantageusement le PiP avec une valeur de e=39 mm, ce qui correspond une précontrainte de traction de 100.15 MPa dans la conduite intérieure lorsque le PiP est hors service, ce qui représente 24.3% de la limite élastique, à une contrainte nulle lorsque le différentiel de température est de δT=60°C, et une contrainte de compression de 100.15 MPa lorsque le différentiel de température est maximum 8T=120°C. Ladite contrainte de traction initiale au repos correspond alors à une pré tension de 128.5 tonnes. En augmentant la valeur de e, on diminue le niveau de contrainte maximale de compression dans la conduite intérieure à la température maximale de fonctionnement. Ces valeurs ne sont données qu'à titre illustratif de l'intérêt de l'invention et ne sont qu'approchées, car le calcul exact des contraintes internes au PiP en fonctionnement doit aussi prendre en compte les effets de la pression interne du fluide circulant, ainsi que les effets de la pression au niveau du fond de la mer qui est approximativement de 10MPa, soit environ 100bars par tranche de 1000m. Ainsi, en fonction des divers paramètres de fonctionnement du PiP (pression de service, température, profondeur d'eau, ...), on sera amené à considérer des valeurs de e adaptées aux conditions de service, donc à décaler vers le bas la contrainte maximale de compression dans la conduite intérieure d'un pourcentage adapté à chacun des cas rencontrés.

Au cas où le système d'isolation pré installé entre les deux conduites présente une limite supérieure à ne pas dépasser, par exemple 120°C, on effectuera avantageusement une expansion mixte, dans laquelle une partie de l'expansion est produite de manière thermique, le solde étant effectué à l'aide d'un des moyens de traction précédemment décrit. Ce dispositif mixte est aussi avantageux sur le plan sécurité, car il permet d'éviter aux opérateurs de travailler à proximité d'éléments mécaniques sous efforts de tension considérables, les dites tensions étant de l'ordre de 300-500 tonnes et pouvant même atteindre 1000 tonnes voire plus dans le cas de très grosses conduites de type PiP.

Dans le cas où l'on utilise une tête de soudage fixe et où l'on fait tourner la rame, comme décrit en regard des figures 4A-4B-4C-4D, l'espace nécessaire au seul passage de la tête est beaucoup plus réduit et peut dans certains cas être limité à 5-6 cm, ce qui réduit d'autant les efforts nécessaires, ou l'ampleur des effets thermiques nécessaires pour atteindre le résultat.

L'expansion thermique présente un avantage de sécurité, car il n'implique pas de travailler à proximité d'éléments sous fortes contraintes mécaniques. Par contre, la mise en température et le refroidissement de la conduite interne nécessitent une certaine durée qui réduit d'autant les cadences de production.

L'expansion mécanique nécessite des efforts considérables qui atteignent plusieurs centaines de tonnes et implique des moyens de sécurité adaptés. En revanche, la mise en tension et le relâchement de ladite tension sont effectués dans des temps très courts de l'ordre de quelques minutes.

Selon une autre variante de réalisation de l'invention, on installe à quelques mètres des extrémités de la conduite intérieure, des bouchons obturateurs, communément appelés « packers », permettant ainsi de remplir intégralement d'eau ladite conduite intérieure, puis de la mettre sous pression pour obtenir l'allongement de ladite conduite intérieure. A titre d'exemple, dans le cas de PiP détaillé précédemment, l'expansion sous le seul effet de fond de la conduite intérieure pour une pression de 300 bars est d'environ 32.6mm pour une dite rame de longueur 50 m. Toutefois, ce mode d'expansion n'est intéressant que pour de très longues rames (75-100m), car la valeur de L reste faible pour des rames de 50m.

Selon une variante de réalisation de l'invention, on utilise lesdits packers pour réaliser au sein de la conduite intérieure un volume étanche dans lequel on fait circuler de l'eau chaude, l'eau chaude provenant par exemple d'un réservoir calorifugé et maintenu à la température désirée. Ainsi, en début de cycle, après installation des packers, ledit volume est rempli par de l'eau déjà chaude et est maintenue à la température voulu par simple circulation, l'apport de calories étant effectué de préférence au sein du réservoir calorifugé. En fin de cycle, on récupère l'eau chaude que l'on renvoie vers ledit réservoir calorifugé, en attente du prochain cycle. Ce mode de chauffage est avantageusement couplé à un mode de traction mécanique pour atteindre un niveau d'expansion plus élevé.

## Revendications

1. Elément de conduites coaxiales (1) comprenant une conduite interne (1b) et une conduite externe (1a) avec un espace annulaire (1d), de préférence rempli d'un matériau d'isolation (1e), et à chaque extrémité une fermeture dudit espace annulaire constituée par une pièce de jonction de révolution (2a, 2b) raccordée aux extrémités des dites conduite interne et externe et apte à permettre le raccordement deux dits éléments de conduites coaxiales (1) bout à bout,
**caractérisé en ce que** ladite conduite interne (1b) est soumise à une contrainte de traction entre les extrémités fermées du dit espace annulaire exercée par lesdites fermetures, lorsque ledit élément de conduite coaxiale est hors service.

2. Elément de conduites coaxiales selon la revendication 1, **caractérisé en ce que** ladite conduite interne (1b) est soumise à une traction correspondant à une contrainte de traction inférieure à 90%, de préférence de 5 à 75% de la limite élastique de l'acier constituant ladite conduite interne, lorsque ledit élément de conduites coaxiales est hors service.

3. Elément de conduites coaxiales selon la revendication 1 ou 2, **caractérisé en ce que** la dite pièce de jonction comporte au moins deux premières branches de révolution (3₁, 3₂) dont
- une première branche de révolution interne (3₂) soudée directement à une extrémité de ladite conduite interne et
- une première branche externe (3₁) soudée directement à l'extrémité de ladite conduite externe ou par l'intermédiaire de deux demi coquilles 14 en forme de demi manchons tubulaires formant un manchon tubulaire intercalé entre les extrémités des conduite externe et pièce de jonction,
- lesdites premières branches internes de révolution (3₁) étant plus longues par rapport aux dites premières branches externes (3₁) d'une longueur L₁ dans la direction longitudinale axiale (XX') dudit élément de conduites coaxiales.

4. Elément de conduites coaxiales selon l'une des revendications 1 à 3, **caractérisé en ce qu'**il est destiné à l'assemblage de conduites sous-marines en acier et présente une longueur de 10 à 100 m, de préférence de 20 à 50 m.

5. Elément de conduites coaxiales selon l'une des revendications 1 à 4, **caractérisé en ce que** le matériau isolant (1e) est un matériaux microporeux ou nanoporeux, de préférence un aérogel, se présentant, de préférence encore, sous forme de grains de 0,5 à 5 mm de diamètre.

6. Conduite constituée d'un ensemble d'au moins deux conduites coaxiales constituées de l'assemblage d'au moins deux éléments de conduites coaxiales selon l'une des revendications 1 à 5, raccordés les uns aux autres par soudage, la dite conduite interne étant sous contrainte de traction lorsque la dite conduite est hors service.

7. Procédé de fabrication d'un élément de conduites coaxiales (1) selon l'une des revendications 1 à 6, **caractérisé en ce qu'**on réalise les étapes successives suivantes dans lesquelles :
1/ on réalise la fermeture de l'espace annulaire à une première extrémité dudit élément de conduites coaxiales par raccordement à une pièce de jonction, et
2) avant fermeture de l'espace annulaire à la seconde extrémité du dit élément de conduite en cours de fabrication par raccordement à une pièce de jonction directement ou par l'intermédiaire de deux demi coquilles 14 en forme de demi manchons tubulaires formant un manchon tubulaire intercalé entre les extrémités des conduite externe et pièce de jonction, on expanse la seconde extrémité de la conduite interne dans la direction longitudinale axiale (XX') d'une longueur L par rapport à ladite seconde extrémité correspondante de ladite conduite externe (1a), et
3) on réalise la fermeture de la seconde extrémité de l'espace annulaire de manière à ce que la dite conduite interne soit soumise à une dite contrainte de traction après fermeture de la seconde extrémité de l'espace annulaire.

8. Procédé de fabrication selon la revendication 7, dans lequel ledit élément de conduites coaxiales (1) comprend une conduite interne (1a) et une conduite externe (1b) et comporte à chacune de ses extrémités une pièce de jonction forgée de révolution (2a, 2b), chaque dite pièce de jonction forgée (2a, 2b) comportant au moins deux premières branches de révolution, dont une première branche interne (3₂) et une première branche externe (3₁), l'extrémité cylindrique de ladite première branche externe (3₁) étant en retrait d'une longueur L₁ par rapport à l'extrémité cylindrique de ladite première branche interne (3₂),
**caractérisé en ce que**:
- à l'étape 1 on réalise les étapes successives suivantes dans lesquelles:
1a/ on soude l'extrémité cylindrique de ladite première branche interne (3₂) d'une première pièce de jonction (2a), avec une première extrémité de ladite conduite interne (1b) non recouverte par la conduite externe (1a), la soudure étant réalisée depuis l'extérieure de ladite conduite interne, et
1b/ on déplace ladite conduite externe (1a) co-axialement autour de ladite conduite interne, de manière à ce qu'une première extrémité de ladite conduite externe arrive bout à bout avec l'extrémité correspondante de la première branche externe (3₁) de ladite première pièce de jonction, la seconde extrémité de ladite conduite interne étant en retrait par rapport à la seconde extrémité correspondante de ladite conduite externe d'une longueur L₃ =L₁+e, et
1c) on soude l'extrémité de ladite première branche externe (3₁) de ladite première pièce de jonction forgée (2a) avec l'extrémité de ladite conduite externe (1a), depuis l'extérieur de ladite conduite externe, et
- à l'étape 2) on expanse dans la direction longitudinale axiale (XX'), ladite seconde extrémité de ladite conduite interne (1b), de manière à ce que celle-ci dépasse d'une longueur L2 supérieure ou égale à L₁+e par rapport à ladite seconde extrémité correspondante de ladite conduite externe (1a), et
- à l'étape 3), on réalise les étapes successives suivantes dans lesquelles:
3a) on soude depuis l'extérieur de ladite conduite interne (1b), l'extrémité de la première branche interne (3₂) d'une deuxième dite pièce forgée (2b) avec ladite seconde extrémité de ladite conduite interne (1b) en position expansée, et
3b) on résorbe en partie seulement l'expansion de ladite conduite interne jusqu'à ce que ladite seconde extrémité de ladite première branche externe (3₁) de ladite deuxième pièce forgée (2b) arrive bout à bout avec ladite seconde extrémité de ladite conduite externe (1a) et
3c) on soude depuis l'extérieur de ladite conduite externe, l'extrémité de ladite première branche externe (3₁) de ladite deuxième pièce forgée (2b) avec ladite seconde extrémité de ladite conduite externe, ladite conduite interne (1b) se trouvant soumise à une traction correspondant à un allongement résiduel inférieur ou égal à e.

9. Procédé de fabrication selon la revendication 7 d'un élément de conduites coaxiales (1) comprenant une conduite interne (1a) et une conduite externe (1b) et comportant à chacune de ses extrémités une pièce de jonction forgée de révolution (2a, 2b), chaque dite pièce de jonction forgée (2a, 2b) comportant au moins deux premières branches de révolution, dont une première branche interne (3₂) et une première branche externe (3₁), l'extrémité cylindrique de ladite première branche externe (3₁) étant en retrait d'une longueur L₁ par rapport à l'extrémité cylindrique de ladite première branche interne (3₂) et comprenant deux demi coquilles 14 en forme de demi manchons tubulaires formant un manchon tubulaire intercalé entre les extrémités des conduite externe et pièces de jonction ,
**caractérisé en ce que**:
- avant l'étape 2), ladite seconde extrémité de ladite conduite interne (1b), dépasse d'une longueur L2 par rapport à ladite seconde extrémité correspondante de ladite conduite externe (1a), et on soude depuis l'extérieur de ladite conduite interne (1b), l'extrémité de la première branche interne (3₂) d'une deuxième dite pièce forgée (2b) avec ladite seconde extrémité de ladite conduite interne (1b), et
- à l'étape 2), on expanse, dans la direction longitudinale axiale (XX'), ladite seconde extrémité de ladite conduite interne (1b), d'une longueur supérieure ou égale à e, de manière à ce qu'elle dépasse d'au moins L2+e par rapport à ladite seconde extrémité de ladite conduite externe (1a), et
- à l'étape 3), on réalise les étapes successives suivantes dans lesquelles:
3a) on intercale entre les extrémités des conduite externe et dite première branche externe de la pièce forgée deux demi coquilles 14 en forme de demi manchons tubulaires formant un manchon tubulaire d'une longueur L1+L2+e, et
3b) on résorbe en partie seulement l'expansion de ladite conduite interne jusqu'à ce que l'extrémité de ladite première branche externe (3₁) de la deuxième pièce forgée (2b) et ladite seconde extrémité de ladite conduite externe (1a) arrivent bout à bout avec les extrémités des deux demi coquilles du dit manchon, et
3c) on soude depuis l'extérieur de ladite conduite externe, l'extrémité de ladite première branche externe (3₁) de ladite deuxième pièce forgée (2b) et la ladite seconde extrémité de ladite conduite externe avec les extrémités des deux demi coquilles du dit manchon, ladite conduite interne (1b) se trouvant soumise à une traction correspondant à un allongement résiduel inférieur ou égal à e.

10. Procédé selon l'une des revendications 7 à 9, **caractérisé en ce que**, à l'étape 2/, on réalise l'expansion de ladite conduite interne par chauffage de celle-ci, de préférence à l'aide de dispositifs de chauffage (3, 4) que l'on introduit et, de préférence que l'on déplace à l'intérieur de ladite conduite interne et que l'on fait agir de manière uniforme ou non le long de ladite conduite, à l'intérieur de celle-ci.

11. Procédé selon l'une des revendications 7 à 9, **caractérisé en ce que**, à l'étape 2/, on réalise ladite expansion par traction longitudinale (XX') mécanique de ladite conduite interne à l'aide d'un dispositif de traction (8, 13) comprenant un treuil (8) ou un vérin (13) disposé à l'extérieur de ladite conduite interne.

12. Procédé selon la revendication 11, **caractérisé en ce que**, à l'étape 2/, ladite expansion se fait par traction longitudinale de ladite conduite interne et compression longitudinale simultanée de ladite conduite externe au niveau de leurs dites secondes extrémités.

13. Procédé selon la revendication 10, 11 ou 12, **caractérisé en ce qu'**on réalise la dite expansion avec un dispositif de traction (8, 13) qui comprend ou coopère avec :
- des moyens de blocage de ladite conduite interne (6-6a-6b), permettant ainsi une translation longitudinale de ladite conduite interne en expansion lorsque le dispositif de traction est actionné, et autorisant la rotation de ladite conduite interne autour de son axe longitudinal (XX') le cas échéant, et
- des moyens de blocage de ladite conduite externe (11a-11b,11), empêchant tout mouvement de translation longitudinale de ladite conduite externe, et autorisant sa rotation autour de son axe longitudinal (XX').

14. Procédé selon la revendication 13, **caractérisé en ce que** lesdits moyens de blocage de la conduite externe comprennent :
- un premier dispositif de blocage par compression radiale (11b) disposé fixement autour de ladite conduite externe tel qu'un collier à coins bloquant (11a), et
- un premier corps périphérique (11) fixe par rapport au sol, coopérant avec ledit premier dispositif de blocage (11b) par l'intermédiaire d'un premier palier (11a) autorisant la rotation de ladite conduite externe selon son axe longitudinal (XX').

15. Procédé selon la revendication 14, **caractérisé en ce que** ledit premier palier (11a) comprend des roulements à rouleaux croisés (11c), dans et entre une cage intérieure (11a₂) solidaire dudit collier (11b), et une cage extérieure (11a₁) solidaire dudit premier corps périphérique fixe (11).

16. Procédé selon l'une des revendications 12 à 15, **caractérisé en ce que** ledit dispositif de traction comprend ou coopère avec au moins un tirant (12c), constitué d'un câble ou d'une tige rigide, apte à être déplacé en translation longitudinale (XX') par treuil (8) ou un vérin (13), relié à un deuxième dispositif de blocage (6-6a-6b) de ladite conduite interne par compression radiale de la paroi interne (2₂) de ladite conduite interne, disposé à l'intérieur de ladite conduite interne, tel qu'un mandrin autobloquant.

17. Procédé selon la revendication 16, **caractérisé en ce que** ledit dispositif de traction comprend au moins deux vérins (13) diamétralement opposés, de préférence au moins quatre vérins (13) régulièrement répartis circulairement, dont les pistons (13a) solidaires de tiges (13b) viennent en butée (13c) avec ledit premier corps périphérique fixe (11) support dudit premier palier (11a), lesdits vérins étant reliés au dit tirant (12c) par l'intermédiaire d'un second palier (12a), constitué de préférence d'un roulement à rouleaux croisés, comportant un second corps périphérique fixe par rapport au sol (12) supportant lesdits vérins (13, apte à coopérer avec un support (12b) solidaire dudit tirant (12c), de sorte qu'en appliquant aux vérins (13) une pression (P), le tirant (12c) exerce une traction sur la conduite interne, tout en autorisant la rotation dudit élément de conduites autour de son axe longitudinal (XX'), lesdits premier et second corps périphériques (11, 12) ainsi que les tiges (13b) des vérins (13) restant fixes par rapport au sol, autorisant ainsi l'utilisation d'une tête de soudage fixe (9).

## Patentansprüche

1. Koaxialleitungselement (1), umfassend eine innere Leitung (1b) und eine äußere Leitung (1a) mit einem ringförmigen Raum (1 d), der vorzugsweise mit einem Isoliermaterial (1 e) ausgefüllt ist, sowie, an jedem Ende, einen Verschluss des ringförmigen Raums, der von einem Rotationsverbindungsteil (2a, 2b) gebildet ist, das an die Enden der inneren und der äußeren Leitung angeschlossen und geeignet ist, das stumpfe Verbinden von zwei Koaxialleitungselementen (1) zu ermöglichen,
**dadurch gekennzeichnet, dass** die innere Leitung (1 b) zwischen den geschlossenen Enden des ringförmigen Raums einer durch die Verschlüsse ausgeübten Zugspannung ausgesetzt ist, wenn das Koaxialleitungselement außer Betrieb ist.

2. Koaxialleitungselement nach Anspruch 1, **dadurch gekennzeichnet, dass** die innere Leitung (1 b) einem Zug, der einer Zugspannung von weniger als 90 %, vorzugsweise von 5 bis 75 % der Streckgrenze des die innere Leitung bildenden Stahls entspricht, ausgesetzt ist, wenn das Koaxialleitungselement außer Betrieb ist.

3. Koaxialleitungselement nach Anspruch 1 oder 2, **dadurch gekennzeichnet, dass** das Verbindungsteil wenigstens zwei erste Rotationsschenkel (3₁, 3₂) umfasst, darunter
- einen ersten inneren Rotationsschenkel (3₂), der direkt an ein Ende der inneren Leitung geschweißt ist und
- einen ersten äußeren Schenkel (3₁), der direkt an das Ende der äußeren Leitung geschweißt ist oder mittels zweier Halbschalen (14) in Form von rohrförmigen Halbmuffen, die eine zwischen den Enden der äußeren Leitung und des Verbindungsteils eingefügte rohrförmige Muffe bilden,
- wobei die ersten inneren Rotationsschenkel (3₂) gegenüber den ersten äußeren Schenkeln (3₁) um eine Länge L₁ in axialer Längsrichtung (XX') des Koaxialleitungselements länger sind.

4. Koaxialleitungselement nach einem der Ansprüche 1 bis 3, **dadurch gekennzeichnet, dass** es zum Zusammenfügen von Unterwasserleitungen aus Stahl bestimmt ist und eine Länge von 10 bis 100 m, vorzugsweise von 20 bis 50 m aufweist.

5. Koaxialleitungselement nach einem der Ansprüche 1 bis 4, **dadurch gekennzeichnet, dass** das Isoliermaterial (1 e) ein mikroporöses oder nanoporöses Material, vorzugsweise eine Aerogel ist, das, weiterhin bevorzugt, in Form von Körnern mit einem Durchmesser von 0,5 bis 5 mm vorliegt.

6. Leitung, bestehend aus einer Anordnung von wenigstens zwei Koaxialleitungen, die aus der Verbindung von wenigstens zwei miteinander verschweißten Koaxialleitungselementen nach einem der Ansprüche 1 bis 5 bestehen, wobei die innere Leitung unter Zugspannung steht, wenn die Leitung außer Betrieb ist.

7. Verfahren zur Herstellung eines Koaxialleitungselements (1) nach einem der Ansprüche 1 bis 6, **dadurch gekennzeichnet, dass** die folgenden aufeinanderfolgenden Schritte durchgeführt werden, bei denen:
1) das Verschließen des ringförmigen Raums an einem ersten Ende des Koaxialleitungselements durch Anschließen an ein Verbindungsteil vollzogen wird, und
2) vor dem Verschließen des ringförmigen Raums an dem zweiten Ende des in Fertigung befindlichen Leitungselements durch Anschließen an ein Verbindungsteil, direkt oder mittels zweier Halbschalen (14) in Form von rohrförmigen Halbmuffen, die eine zwischen den Enden der äußeren Leitung und des Verbindungsteils eingefügte rohrförmige Muffe bilden, das zweite Ende der inneren Leitung in axialer Längsrichtung (XX') um eine Länge L gegenüber dem entsprechenden zweiten Ende der äußeren Leitung (1a) gedehnt wird, und
3) das Verschließen des zweiten Endes des ringförmigen Raums derart vollzogen wird, dass die innere Leitung nach dem Verschließen des zweiten Endes des ringförmigen Raums einer Zugspannung ausgesetzt ist.

8. Herstellungsverfahren nach Anspruch 7, wobei das Koaxialleitungselement (1) eine innere Leitung (1b) und eine äußere Leitung (1a) umfasst und an jedem seiner Enden ein geschmiedetes Rotationsverbindungsteil (2a, 2b) aufweist, wobei jedes geschmiedete Verbindungsteil (2a, 2b) wenigstens zwei erste Rotationsschenkel umfasst, darunter ein erster innerer Schenkel (3₂) und ein erster äußerer Schenkel (3₁), wobei das zylindrische Ende des ersten äußeren Schenkels (3₁) um eine Länge L₁ gegenüber dem zylindrischen Ende des ersten inneren Schenkels (3₂) zurückliegt,
**dadurch gekennzeichnet, dass**:
- bei Schritt 1 die folgenden aufeinanderfolgenden Schritte durchgeführt werden, bei denen:
1a/ das zylindrische Ende des ersten inneren Schenkels (3₂) eines ersten Verbindungsteils (2a) mit einem ersten Ende der nicht durch die äußere Leitung (1a) bedeckten inneren Leitung (1 b) verschweißt wird, wobei die Schweißnaht von der Außenseite der inneren Leitung aus hergestellt wird, und
1b/ die äußere Leitung (1a) koaxial um die innere Leitung herum bewegt wird, so dass ein erstes Ende der äußeren Leitung mit dem entsprechenden Ende des ersten äußeren Schenkels (3₁) des ersten Verbindungsteils aneinander gelangt, wobei das zweite Ende der inneren Leitung gegenüber dem entsprechenden zweiten Ende der äußeren Leitung um eine Länge L₃ = L₁ + e zurückliegt, und
1c/ das Ende des ersten äußeren Schenkels (3₁) des ersten geschmiedeten Verbindungsteils (2a) mit dem Ende der äußeren Leitung (1a) von der Außenseite der äußeren Leitung aus verschweißt wird, und
- bei Schritt 2) das zweite Ende der inneren Leitung (1 b) in axialer Längsrichtung (XX') gedehnt wird, so dass dieses gegenüber dem entsprechenden zweiten Ende der äußeren Leitung (1a) um eine Länge L2, welche größer als oder gleich L₁ + e ist, vorsteht, und
- bei Schritt 3) die folgenden aufeinanderfolgenden Schritte durchgeführt werden, bei denen:
3a) von der Außenseite der inneren Leitung (1 b) aus das Ende des ersten inneren Schenkels (3₂) eines zweiten Schmiedeteils (2b) mit dem zweiten Ende der inneren Leitung (1 b) in gedehnter Position verschweißt wird, und
3b) die Dehnung der inneren Leitung nur teilweise verringert wird, bis das zweite Ende des ersten äußeren Schenkels (3₁) des zweiten Schmiedeteils (2b) mit dem zweiten Ende der äußeren Leitung (1 a) aneinander gelangt, und
3c) von der Außenseite der äußeren Leitung aus das Ende des ersten äußeren Schenkels (3₁) des zweiten Schmiedeteils (2b) mit dem zweiten Ende der äußeren Leitung verschweißt wird, wobei die innere Leitung (1b) sich einem Zug, der einer Restlängung von weniger als oder gleich e entspricht, ausgesetzt befindet.

9. Verfahren nach Anspruch 7 zur Herstellung eines Koaxialleitungselements (1), das eine innere Leitung (1 b) und eine äußere Leitung (1 a) umfasst und an jedem seiner Enden ein geschmiedetes Rotationsverbindungsteil (2a, 2b) aufweist, wobei jedes geschmiedete Verbindungsteil (2a, 2b) wenigstens zwei erste Rotationsschenkel umfasst, darunter ein erster innerer Schenkel (3₂) und ein erster äußerer Schenkel (3₁), wobei das zylindrische Ende des ersten äußeren Schenkels (3₁) um eine Länge L₁ gegenüber dem zylindrischen Ende des ersten inneren Schenkels (3₂) zurückliegt und zwei Halbschalen (14) in Form von rohrförmigen Halbmuffen, die eine zwischen den Enden der äußeren Leitung und der Verbindungsteile eingefügte rohrförmige Muffe bilden, umfasst,
**dadurch gekennzeichnet, dass**:
- vor Schritt 2) das zweite Ende der inneren Leitung (1b) gegenüber dem entsprechenden zweiten Ende der äußeren Leitung (1a) um eine Länge L2 vorsteht und von der Außenseite der inneren Leitung (1 b) aus das Ende des ersten inneren Schenkels (3₂) eines zweiten Schmiedeteils (2b) mit dem zweiten Ende der inneren Leitung (1b) verschweißt wird, und
- bei Schritt 2) das zweite Ende der inneren Leitung (1 b) um eine Länge größer als oder gleich e in der axialen Längsrichtung (XX') gedehnt wird, so dass es um wenigstens L2 + e gegenüber dem zweiten Ende der äußeren Leitung (1a) vorsteht, und
- bei Schritt 3) die folgenden aufeinanderfolgenden Schritte durchgeführt werden, bei denen:
3a) zwischen den Enden der äußeren Leitung und des ersten äußeren Schenkels des Schmiedeteils zwei Halbschalen (14) in Form von rohrförmigen Halbmuffen, die eine rohrförmige Muffe mit einer Länge L1 + L2 + e bilden, eingefügt werden, und
3b) die Dehnung der inneren Leitung nur teilweise verringert wird, bis das Ende des ersten äußeren Schenkels (3₁) des zweiten Schmiedeteils (2b) und das zweite Ende der äußeren Leitung (1a) mit den Enden der beiden Halbschalen der Muffe aneinander gelangen, und
3c) von der Außenseite der äußeren Leitung aus das Ende des ersten äußeren Schenkels (3₁) des zweiten Schmiedeteils (2b) und das zweite Ende der äußeren Leitung mit den Enden der beiden Halbschalen der Muffe verschweißt werden, wobei die innere Leitung (1 b) sich einem Zug, der einer Restlängung von weniger als oder gleich e entspricht, ausgesetzt befindet.

10. Verfahren nach einem der Ansprüche 7 bis 9, **dadurch gekennzeichnet, dass** bei Schritt 2/ die Dehnung der inneren Leitung durch deren Erhitzen vollzogen wird, vorzugsweise mit Hilfe von Heizvorrichtungen (3, 4), die in die innere Leitung eingeführt und vorzugsweise darin bewegt werden und die man entlang der Leitung, innerhalb dieser, gleichmäßig oder nicht gleichmäßig wirken lässt.

11. Verfahren nach einem der Ansprüche 7 bis 9, **dadurch gekennzeichnet, dass** bei Schritt 2/ die Dehnung durch mechanisches Längsziehen (XX') der inneren Leitung mit Hilfe einer Zugvorrichtung (8, 13) mit einer Winde (8) oder einem Zylinder (13), die außerhalb der inneren Leitung angeordnet ist, durchgeführt wird.

12. Verfahren nach Anspruch 11, **dadurch gekennzeichnet, dass** bei Schritt 2/ die Dehnung durch Längsziehen der inneren Leitung und gleichzeitiges Längszusammendrücken der äußeren Leitung im Bereich ihrer zweiten Enden erfolgt.

13. Verfahren nach Anspruch 10, 11 oder 12, **dadurch gekennzeichnet, dass** die Dehnung mit einer Zugvorrichtung (8, 13) vollzogen wird, die umfasst oder zusammenwirkt mit:
- Mittel(n) zum Festlegen der inneren Leitung (6-6a-6b), wodurch ein dehnendes Längsverschieben der inneren Leitung ermöglicht wird, wenn die Zugvorrichtung betätigt wird, und die gegebenenfalls das Drehen der inneren Leitung um ihre Längsachse (XX') ermöglichen, und
- Mittel(n) zum Festlegen der äußeren Leitung (11a-11b, 11), die jedwede Längsverschiebebewegung der äußeren Leitung verhindern und deren Drehen um ihre Längsachse (XX') zulassen.

14. Verfahren nach Anspruch 13, **dadurch gekennzeichnet, dass** die Mittel zum Festlegen der äußeren Leitung umfassen:
- eine erste Vorrichtung zum Festlegen durch Radialdruck (11 b), die fest um die äußere Leitung herum angeordnet ist, wie eine Schelle mit blockierenden Keilen (11b), und
- einen gegenüber dem Boden festen ersten Umfangskörper (11), der mit der ersten Festlegungsvorrichtung (11 b) mittels eines ersten Lagers (11a) zusammenwirkt, das das Drehen der äußeren Leitung um ihre Längsachse (XX') zulässt.

15. Verfahren nach Anspruch 14, **dadurch gekennzeichnet, dass** das erste Lager (11a) Kreuzrollenlager (11 c) in und zwischen einem inneren Käfig (11a₂), der mit der Schelle (11b) fest verbunden ist, und einem äußeren Käfig (11a₁), der mit dem ersten festen Umfangskörper (11) fest verbunden ist, umfasst.

16. Verfahren nach einem der Ansprüche 12 bis 15, **dadurch gekennzeichnet, dass** die Zugvorrichtung wenigstens ein Zugglied (12c), gebildet von einem Seil oder einer starren Stange, das/die geeignet ist, mittels Winde (8) oder eines Zylinders (13) längsverschieblich (XX') bewegt zu werden, umfasst oder mit diesem zusammenwirkt, das mit einer zweiten Vorrichtung zum Festlegen (6-6a-6b) der inneren Leitung durch radiales Zusammendrücken der inneren Wand (2₂) der inneren Leitung, welche innerhalb der inneren Leitung angeordnet ist, wie einem selbsthemmenden Dorn verbunden ist.

17. Verfahren nach Anspruch 16, **dadurch gekennzeichnet, dass** die Zugvorrichtung wenigstens zwei diametral gegenüberliegende Zylinder (13), vorzugsweise wenigstens vier gleichmäßig kreisförmig verteilte Zylinder (13) umfasst, deren mit Stangen (13b) fest verbundene Kolben (13a) mit dem ersten festen Umfangskörper (11), welcher Träger des ersten Lagers (11a) ist, in Anschlag gelangen, wobei die Zylinder mit dem Zugglied (12c) über ein vorzugsweise von einem Kreuzrollenlager gebildetes zweites Lager (12a) verbunden sind, das einen gegenüber dem Boden festen zweiten Umfangskörper (12), welcher die Zylinder (13) trägt, umfasst, der geeignet ist, mit einem mit dem Zugglied (12c) fest verbundenen Träger (12b) zusammenzuwirken, so dass durch Anlegen an die Zylinder (13) eines Druckes (P) das Zugglied (12c) einen Zug auf die innere Leitung ausübt und gleichzeitig das Drehen des Leitungselements um seine Längsachse (XX') ermöglicht wird, wobei der erste und der zweite Umfangskörper (11, 12) sowie die Stangen (13b) der Zylinder (13) gegenüber dem Boden fest bleiben, wodurch die Verwendung eines festen Schweißkopfes (9) gestattet wird.

## Claims

1. A coaxial pipe element (1) comprising an inner pipe (1b) and an outer pipe (1a) with an annular space (1d) that is preferably filled with an insulating material (1e), and at each end a closure of said annular space that is constituted:
· either by a junction forging (2a, 2b) in the form of a body of revolution connected to the ends of said inner and outer pipes and suitable for enabling two of said coaxial pipe elements (1) to be connected together end to end;
· or else by pinching (2c), which consists in deforming the end portion of the outer pipe so that its end is connected directly to the surface of the inner pipe, preferably by welding;
the element being **characterized in that** said inner pipe (1b) is subjected to traction stress between the closed end of said annular space exerted by said closures, when said coaxial pipe element is not in service.

2. A coaxial pipe element according to claim 2, **characterized in that**, when said coaxial pipe element is not in service, said inner pipe (1b) is subjected to traction corresponding to traction stress that is less than 90%, preferably less than 5% to 75%, of the elastic limit of the steel constituting said inner pipe.

3. A coaxial pipe element according to claim 1 or claim 2, **characterized in that** it includes at at least one end a closure of said annular space constituted by a junction forging (2a, 2b) in the form of a body of revolution, said junction forging comprising at least two first cylindrical branches (3₁, 3₂) including,
· an inner first cylindrical branch (3₂) welded directly to one end of said inner pipe; and
· an outer first branch (3₁) welded directly to the end of said outer pipe or via two half-shells (14) in the form of tubular half-sleeves forming a tubular sleeve interposed between the end of the outer pipe and the end of the junction forging; and
· an outer first branch (3₁) welded directly to the end of said outer pipe or via two half-shells (14) in the form of tubular half-sleeves, together forming a tubular sleeve that is interposed between the end of the outer pipe and the end of the junction forging;
· said inner first cylindrical branches (3₂) being longer than said outer first branches (3₁) by a length L₁ in the axial longitudinal direction (XX') of said coaxial pipe elements.

4. A coaxial pipe element according to any one of claims 1 to 3, **characterized in that** it is designed for use in assembling steel undersea pipes, and presents a length lying in the range 10 m to 100 m, and preferably in the range 20 m to 50 m.

5. A coaxial pipe element according to any one of claims 1 to 4, **characterized in that** the insulating material (1e) is a microporous or nanaporous material, preferably an aerogel, more preferably in the form of grains having a diameter lying in the range 0.5 mm to 5 mm.

6. A pipe constituted by an assembly of at least two coaxial pipes constituted by assembling together at least two coaxial pipe elements according to any one of claims 1 to 5, connected to each other by welding, said inner pipe being under traction stress when said pipe is not in service.

7. A method of fabricating a coaxial pipe element (1) according to any one of claims 1 to 6, **characterized in that** the following successive steps are performed:
1) closing the annular space at a first end of said coaxial pipe element either by pinching or by connecting to a junction forging; and
2) prior to closing the annular space at the second end of said pipe element during fabrication, either by pinching or by connecting to a junction forging, directly or via two half-shells (14) in the form of tubular half-sleeves forming a tubular sleeve interposed between the end of the outer pipe and the end of the junction forging, the second end of the inner pipe is expanded in the axial longitudinal direction (XX') through a length L relative to said corresponding second end of said outer pipe (1a); and
3) the second end of the annular space is closed in such a manner that said inner pipe is subjected to a said traction stress after closure of the second end of the annular space.

8. A method of fabricating a coaxial pipe element (1) comprising an inner pipe (1a) and an outer pipe (1b), and including at each of its ends a junction forging (2a, 2b) in the form of a body of revolution, each said junction forging (2a, 2b) having at least two first cylindrical branches, including an inner first branch (3₂) and an outer first branch (3₁), the cylindrical end of said outer first branch (3₁) being set back by a length L₁ from the cylindrical end of said inner first branch (3₂) according to claim 7,
the method being **characterized in that**:
· in step 1), the following steps are performed in succession:
1a) welding the cylindrical end of said inner first branch (3₂) of a first junction forging (2a) to a first end of said inner pipe (1b) that is not covered by the outer pipe (1a), welding being performed from the outside of said inner pipe; and
1b) moving said outer pipe (1a) coaxially around said inner pipe so that a first end of said outer pipe makes end-to-end contact with the corresponding end of the outer first branch (3₁) of said first junction forging, the second end of said inner pipe being set back from the corresponding second end of said outer pipe by a length L₃ = L₁+e; and
1c) welding the end of said outer first branch (3₁) of said first junction forging (2a) to the end of said outer pipe (1a), from the outside of said outer pipe; and
· in step 2), expanding said second end of said inner pipe (1b) in the axial longitudinal direction (XX') so that it projects by a length L₂ greater than or equal to L₁+e, beyond said second end corresponding to said outer pipe (1a); and
· in step 3) the following steps are performed in succession:
3a) from the outside of said inner pipe (1b), while said inner pipe (1b) is in the expanded position, welding said second end of said inner pipe (1b) to the end of the inner first branch (3₂) of a second said forging (2b); and
3b) resorbing the expansion of said inner second pipe until said second end of said outer first branch (3₁) of said second forging (2b) comes end-to-end with said second end of said outer pipe (1a); and
3c) from the outside of said outer pipe, welding the end of said outer first branch (3₁) of said second forging (2b) to said second end of said outer pipe, said inner pipe (1b) being subjected to traction corresponding to a residual elongation that is less than or equal to e.

9. A method of fabricating a coaxial pipe element (1) according to claim 7, comprising an inner pipe (1a) and an outer pipe (1b), and including at each of its ends a junction forging (2a, 2b) in the form of a body of revolution, each said junction forging (2a, 2b) having at least two first cylindrical branches, including an inner first branch (3₂) and an outer first branch (3₁), the cylindrical end of said outer first branch (3₁) being set back by a length L₁ from the cylindrical end of said inner first branch (3₂), and comprising two half-shells (14) in the form of tubular half-sleeves forming a tubular sleeve interposed between the end of said outer pipe and the end of the junction forging;
the method being **characterized by** the following steps:
· prior to step 2), with said second end of said inner pipe (1b) projecting by a length L₂ from said corresponding second end of said outer pipe (1a), acting from the outside of said inner pipe (1b) to weld the end of the inner first branch (3₂) of a second said forging (2b) to said second end of said inner pipe (1b); and
· in step 2), expanding said second end of said inner pipe (1b) in the axial longitudinal direction (XX') through a length greater than or equal to e, so that it projects by at least L₂+e relative to said second end of said outer pipe (1a); and
· in step 3), performing the following successive steps:
3a) interposing between the end of the outer pipe and the end of said outer first branch of the forging, two half-shells (14) in the form of tubular half-sleeves forming a tubular sleeve of length L₁+L₂+e; and
3b) resorbing part only of the expansion of said inner pipe until the end of said first outer branch (3₁) of the second forging (2b) and said second end of said outer pipe (1a) come into end-to-end contact with the ends of the two half-shells of said sleeve; and
3c) from the outside of said outer pipe, welding the end of said outer first branch (3₁) of said second forging (2b) and said second end of said outer pipe with the ends of the two half-shells of said sleeve, said inner pipe (1b) being subjected to traction corresponding to a residual elongation that is less than or equal to e.

10. A method according to any one of claims 7 to 9, **characterized in that**, in step 2), said inner pipe is expanded by being heated, preferably with the help of heater devices (3, 4) that are inserted and preferably moved inside said inner pipe, and that are caused to operate in optionally uniform manner along the inside of said pipe.

11. A method according to any one of claims 7 to 9, **characterized in that**, in step 2), said expansion is performed by applying mechanical traction (XX') to said inner pipe with the help of a traction device (8, 13) comprising a winch (8) or an actuator (13) placed outside said inner pipe.

12. A method according to claim 11, **characterized in that**, in step 2), said expansion is performed by applying longitudinal traction to said inner pipe and simultaneous longitudinal compression to said outer pipe via their said second ends.

13. A method according to claim 10, claim 11, or claim 12, **characterized in that** said traction device (8, 13) comprises or co-operates with:
· means for blocking said inner pipe (6, 6a, 6b), thus enabling said inner pipe to be caused to move in longitudinal translation in expansion when the traction device is actuated, while allowing said inner pipe to rotate about its longitudinal axis (XX') where appropriate; and
· means for blocking said outer pipe (11a, 11b, 11), preventing any movement in longitudinal translation of said outer pipe, and allowing it to rotate about its longitudinal axis (XX').

14. A method according to claim 13, **characterized in that** said means for blocking the outer pipe comprise:
· a first device (11b) for blocking by radial compression that is disposed in stationary manner around said outer pipe, such as a blocking wedge collar (11a); and
· a first peripheral body (11) that is stationary relative to the ground, co-operating with said first blocking device (11b) via a first bearing (11a) allowing said outer pipe to rotate about its longitudinal axis (XX').

15. A method according to claim 14, **characterized in that** said first bearing (11a) comprises crossed roller bearings (11c) in and between an inner cage (11a₂) secured to said collar (11b) and an outer cage (11a₁) secured to said stationary first peripheral body (11).

16. A method according to any one of claims 12 to 15, **characterized in that** said traction device comprises or co-operates with at least one tie member (12c) constituted by a rigid rod or a cable, suitable for being moved in longitudinal translation (XX') by a winch (8) or an actuator (13) connected to a second blocking device (6, 6a, 6b) for blocking said inner pipe by applying radial compression to the inner wall (2₂) of said inner pipe, disposed inside said inner pipe, such as a self-locking mandrel.

17. A method according to claim 16, **characterized in that** said traction device comprises at least two diametrically-opposite actuators (13), preferably at least four actuators (13) that are regularly distributed circularly, having pistons (13a) secured to rods (13b) that come into abutment (13c) against said stationary first peripheral body (11) supporting said first bearing (1a), said actuators being connected to said tie member (12c) via a second bearing (12a), preferably constituted by a crossed roller bearing, comprising a second peripheral body that is stationary relative to the ground (12) supporting said actuators (13), suitable for co-operating with a support (12b) secured to said tie member (12c), such that by applying pressure (P) to said actuators (13), the tie member (12c) exerts traction on the inner pipe while allowing said pipe element to rotate about its longitudinal axis (XX'), said first and second peripheral bodies (11, 12) and the rods (13b) of the actuators (13) remaining stationary relative to the ground, thus enabling a stationary welder head (9) to be used.
